# EUROPEAN PATENT APPLICATION

(11) **EP 4 486 021 A1**
(43) Date of publication of application: **01.01.2025**
(21) Application number: 23794964.9
(22) Date of filing: 04.04.2023
(51) Int. Cl.: H04W 52/24

(54) **POWER CONTROL METHOD AND APPARATUS, AND COMPUTER-READABLE STORAGE MEDIUM**

(30) Priority: 25.04.2022 CN 202210438783
(71) Applicant: Huawei Technologies Co., Ltd., Shenzhen, Guangdong 518129 (CN)
(72) Inventor: LU, Zhenwei, Shenzhen, Guangdong 518129 (CN); WU, Yiling, Shenzhen, Guangdong 518129 (CN); CHEN, Jun, Shenzhen, Guangdong 518129 (CN)
(74) Representative: Körber, Martin Hans
(86) International application number: PCT/CN2023/086157
(87) International publication number: WO 2023/207530

(57) **Abstract**

Embodiments of the present invention disclose a power control method and apparatus, and a computer-readable storage medium. The method includes: A second device determines first indication information, and the second device can send the first indication information to a first device. Correspondingly, the first device may receive the first indication information from the second device, the first device may determine a first transmit power based on the first indication information, and the first device may send a signal at the first transmit power. The first transmit power is less than or equal to a maximum transmit power of the first device. In embodiments of the present invention, the second device may control a transmit power of the first device by sending the first indication information to the first device, so that the transmit power of the first device is less than or equal to the maximum transmit power, thereby reducing interference caused by the first device with another surrounding communication device.

## Description

This application claims priority to Chinese Patent Application No. 202210438783.6, filed with the China National Intellectual Property Administration on April 25, 2022 and entitled "POWER CONTROL METHOD AND APPARATUS, AND COMPUTER-READABLE STORAGE MEDIUM", which is incorporated herein by reference in its entirety.

### TECHNICAL FIELD

The present invention relates to the field of communication technologies, and in particular, to a power control method and apparatus, and a computer-readable storage medium.

### BACKGROUND

A radio frequency identification (radio frequency identification, RFID) technology is a non-contact automatic identification technology. RFID identifies a target object mainly through a dedicated RFID reader/writer (reader) and an RFID tag (tag) that can be attached to the target object, where the tag may store information about the target object. When the tag is in a communication range of the reader/writer, the reader/writer may provide energy for the tag by sending an excitation signal to the tag, and the reader/writer may also send signaling or data to the tag. Correspondingly, the tag may receive the signaling or data sent by the reader/writer, and respond based on the signaling or data sent by the reader/writer, for example, send an electronic product code (electronic product code, EPC) number to the reader/writer, and locally store the data sent by the reader/writer.

Currently, during communication between the tag and the reader, when the tag sends an uplink signal to the reader, the uplink signal is always sent at a maximum transmit power. Consequently, interference with another surrounding communication device is prone to be caused, and communication quality of the another communication device is reduced. Therefore, how to perform power control on the tag to reduce interference caused by the tag with another communication device is an issue of concern of a person skilled in the art.

### SUMMARY

Embodiments of the present invention disclose a power control method and apparatus, and a computer-readable storage medium, to reduce interference caused by a tag with another communication device.

According to a first aspect, a power control method is disclosed. The power control method may be applied to a first device, may be applied to a module (for example, a chip) in the first device, or may be applied to a logic module or software that can implement all or some functions of the first device. Descriptions are provided below by using an example in which the power control method is applied to the first device. The power control method may include:

The first device receives first indication information from a second device, where the first indication information indicates a transmit power.

The first device determines a first transmit power of the first device based on the first indication information, where the first transmit power is less than or equal to a maximum transmit power of the first device.

In this embodiment of the present invention, the first device may receive the first indication information from the second device, and the first device may determine the first transmit power based on the first indication information, where the first transmit power is less than or equal to the maximum transmit power of the first device. Then, the first device may send an uplink signal at the first transmit power. It can be learned that the transmit power of the first device may be controlled based on the first indication information, so that the transmit power of the first device is less than or equal to the maximum transmit power of the first device, thereby reducing interference caused by the first device (for example, a tag) with another communication device. In addition, the first device sends a signal at a reduced power. This can reduce power consumption of the first device. For the first device (for example, a first device including an energy storage circuit or battery inside) that needs to store energy for communication, time in which the first device sends signals can be prolonged, so that more information can be sent.

In a possible implementation, the first indication information is carried in first signaling, second signaling, third signaling, fourth signaling, or fifth signaling. The first signaling is for selecting one or more first devices; the second signaling is for initializing random access of the one or more first devices; the third signaling is for notifying random access; the one or more devices include the first device; the fourth signaling indicates the first device to report a device identifier; and the fifth signaling is for scheduling data.

In this embodiment of the present invention, the first indication information may be carried in one of different signaling, such as the first signaling, the second signaling, the third signaling, the fourth signaling, or the fifth signaling. The different signaling may have different functions, and may be sent at different frequencies. Therefore, flexibility of power control can be improved by carrying the first indication information in one of the different signaling.

In a possible implementation, the fourth signaling further indicates that the first device successfully performs random access.

In a possible implementation, the first signaling is further for changing a status of the selected one or more first devices.

In this embodiment of the present invention, in addition to being for selecting the one or more first devices, the first signaling may be further for changing the status (for example, a value of an inventory flag) of the selected one or more first devices. This can facilitate the one or more first devices in performing subsequent random access, thereby improving efficiency of random access. In addition, changing the status of the first device may further prevent a same first device from performing random access for a plurality of times.

In a possible implementation, the second signaling is broadcast signaling.

In this embodiment of the present invention, the second signaling may be the broadcast signaling. In this way, when the first indication information is carried in the second signaling, power control may be performed on more first devices, thereby improving efficiency of power control.

In a possible implementation, when the first indication information is carried in the first signaling, the first transmit power is valid in a random access process corresponding to the first signaling;
when the first indication information is carried in the second signaling, the first transmit power is valid in a random access process corresponding to the second signaling;
when the first indication information is carried in the third signaling, the first transmit power is valid in a first time period in a random access process corresponding to the third signaling;
when the first indication information is carried in the fourth signaling, the first transmit power is valid in a unicast communication process corresponding to the fourth signaling; or
when the first indication information is carried in the fifth signaling, the first transmit power is valid in an uplink scheduling periodicity corresponding to the fifth signaling.

In this embodiment of the present invention, the first indication information is carried in one of the different signaling, such as the first signaling, the second signaling, the third signaling, the fourth signaling, or the fifth signaling, and valid time of the first indication information may be different. Therefore, in different cases, the first indication information may be flexibly carried in one of the different signaling, so that power control with different time lengths can be implemented.

In a possible implementation, that the first indication information indicates a transmit power includes:
The first indication information indicates the first transmit power; or
the first indication information indicates an adjustment value, where the adjustment value is a difference between a maximum transmit power of the first device and the first transmit power.

In this embodiment of the present invention, the first indication information may directly indicate an absolute transmit power (namely, the first transmit power), or may indicate the adjustment value. A flexible indication manner is used, so that the flexibility of power control can be improved.

In a possible implementation, the method may further include:
The first device receives a reference signal from the second device, where the reference signal is a reference signal corresponding to the first indication information.

That the first device determines a first transmit power of the first device based on the first indication information includes:
The first device determines the first transmit power of the first device based on a first sequence length and the first indication information, where the first sequence length is a sequence length of the reference signal.

In this embodiment of the present invention, the first device may further receive the reference signal from the second device, where the reference signal is the reference signal corresponding to the first indication information. Then, the first device may determine the first transmit power based on both the sequence length of the reference signal and the first indication information. When the first indication information is the same, for different sequence lengths (corresponding to different coverage ranges or coverage levels), the first indication information may indicate different adjustment values or power values, so that the method may be applied to different scenarios more flexibly.

In a possible implementation, the method may further include:
The first device receives second indication information from the second device, where the second indication information indicates a transmit power; and
the first device determines a second transmit power of the first device based on the second indication information, where the second transmit power is less than or equal to the maximum transmit power of the first device; or
the first device determines a third transmit power of the first device based on the second indication information and the first transmit power, where the third transmit power is less than or equal to the first transmit power.

In this embodiment of the present invention, the first device may further receive the second indication information from the second device, and the first device may directly re-determine a transmit power based on the second indication information, that is, determine the second transmit power of the first device; or the first device may re-determine, on a basis of the first indication information, a transmit power based on the second indication information, that is, determine the third transmit power of the first device based on the second indication information and the first transmit power. It can be learned that when receiving a plurality of pieces of indication information (for example, two pieces of indication information), the first device may determine transmit powers in two different manners, and the transmit powers determined by the first device may be different, so that the flexibility of power control can be improved.

In a possible implementation, the method may further include:
The first device receives third indication information from the second device, where the third indication information indicates a device capability or a device type.

That the first device determines a first transmit power of the first device based on the first indication information includes:
When the first device supports the device capability or is of the device type, the first device determines the first transmit power of the first device based on the first indication information.

In this embodiment of the present invention, the first device may further receive the third indication information from the second device, where the third indication information indicates the device capability or the device type. In this way, the first device may determine whether the first device is of the device type indicated by the third indication information or supports the device capability indicated by the third indication information. When determining that the first device is of the device type or supports the device capability, the first device may determine the first transmit power based on the first indication information. When determining that the first device is not of the device type or does not support the device capability, the first device may not respond and does not determine the first transmit power. It can be learned that the first device may respond only when the first device supports the device capability indicated by the third indication information or is of the device type indicated by the third indication information. In other words, power control may be performed, in a targeted manner, on a first device that is of a type or has a capability, thereby improving the efficiency of power control.

In a possible implementation, the maximum transmit power is a maximum transmit power the first device can currently reach.

In this embodiment of the present invention, the maximum transmit power of the first device is the maximum transmit power the first device can currently reach, namely, a maximum transmit power the first device can actually reach when sending a signal. Therefore, it can be ensured that after receiving the first indication information, the first device can make the transmit power of the first device less than or equal to the current maximum transmit power of the first device when sending an uplink signal, thereby reducing interference with another communication device.

According to a second aspect, a power control method is disclosed. The power control method may be applied to a second device, may be applied to a module (for example, a chip) in the second device, or may be applied to a logic module or software that can implement all or some functions of the second device. Descriptions are provided below by using an example in which the power control method is applied to the second device. The power control method may include:
The second device determines first indication information, where the first indication information indicates a transmit power.

The second device sends the first indication information to a first device.

In this embodiment of the present invention, to perform power control on the first device, the second device may first determine the first indication information, and then the second device may send the first indication information to the first device, where the first indication information indicates the transmit power. After receiving the first indication information, the first device may determine a first transmit power based on the first indication information, where the first transmit power is less than or equal to a maximum transmit power of the first device. It can be learned that the second device may control the transmit power of the first device based on the first indication information, so that the transmit power of the first device is less than or equal to the maximum transmit power of the first device, thereby reducing interference caused by the first device (for example, a tag) with another communication device. In addition, the first device reduces the transmit power. This can reduce power consumption of the first device. For the first device (for example, a first device including an energy storage circuit or battery inside) that needs to store energy for communication, time in which the first device sends signals can be prolonged, so that more information can be sent.

In a possible implementation, the first indication information is carried in first signaling, second signaling, third signaling, fourth signaling, or fifth signaling. The first signaling is for selecting one or more first devices; the second signaling is for initializing random access of the one or more first devices; the third signaling is for notifying random access; the one or more devices include the first device; the fourth signaling indicates the first device to report a device identifier; and the fifth signaling is for scheduling data.

In this embodiment of the present invention, the first indication information may be carried in one of different signaling, such as the first signaling, the second signaling, the third signaling, the fourth signaling, or the fifth signaling. The different signaling may have different functions, and may be sent at different frequencies. Therefore, flexibility of power control can be improved by carrying the first indication information in one of the different signaling.

In a possible implementation, the fourth signaling further indicates that the first device successfully performs random access.

In a possible implementation, the first signaling is further for changing a status of the selected one or more first devices.

In this embodiment of the present invention, in addition to being for selecting the one or more first devices, the first signaling may be further for changing the status (for example, a value of an inventory flag) of the selected one or more first devices. Therefore, the second device may select one or more first devices in a targeted manner, and change a status of the one or more first devices. This can facilitate the one or more first devices in performing subsequent random access, thereby improving efficiency of random access. In addition, changing the status of the first device by the second device may further prevent a same first device from performing random access for a plurality of times.

In a possible implementation, the second signaling is broadcast signaling.

In this embodiment of the present invention, the second signaling may be the broadcast signaling, and all first devices in a communication range of the second device may receive the second signaling sent by the second device. In this way, when the first indication information is carried in the second signaling, the second device may perform power control on more first devices, thereby improving efficiency of power control.

In a possible implementation, when the first indication information is carried in the first signaling, a first transmit power is valid in a random access process corresponding to the first signaling;
when the first indication information is carried in the second signaling, a first transmit power is valid in a random access process corresponding to the second signaling;
when the first indication information is carried in the third signaling, a first transmit power is valid in a first time period in a random access process corresponding to the third signaling;
when the first indication information is carried in the fourth signaling, a first transmit power is valid in a unicast communication process corresponding to the fourth signaling; or
when the first indication information is carried in the fifth signaling, a first transmit power is valid in an uplink scheduling periodicity corresponding to the fifth signaling.

In this embodiment of the present invention, the first indication information is carried in one of the different signaling, such as the first signaling, the second signaling, the third signaling, the fourth signaling, or the fifth signaling, and valid time of the first indication information may be different. Therefore, in different cases, the second device may flexibly select signaling that carries the first indication information, so that power control with different time lengths can be implemented.

In a possible implementation, that the first indication information indicates a transmit power includes:
The first indication information indicates the first transmit power; or
the first indication information indicates an adjustment value, where the adjustment value is a difference between a maximum transmit power of the first device and the first transmit power.

In this embodiment of the present invention, the first indication information may directly indicate an absolute transmit power, or may indicate the adjustment value. A flexible indication manner is used, so that the flexibility of power control can be improved.

In a possible implementation, the method may further include:
determining a first sequence length; and
sending a reference signal to the first device, where the reference signal is a reference signal corresponding to the first indication information, and a sequence length of the reference signal is the first sequence length.

In this embodiment of the present invention, the second device may send the reference signal to the second device, where the reference signal is used by the first device to identify start of downlink transmission. In addition, different sequence lengths of the reference signal correspond to different coverage ranges or coverage levels. Therefore, the second device may first determine the sequence length (namely, a first sequence length) of the reference signal, and then send the reference signal to the second device, where the sequence length of the reference signal is the first sequence length. In this way, power control may be performed on first devices in different ranges based on the first indication information. It can be learned that, based on the sequence length of the reference signal and the first indication information, the method may be applied to different scenarios more flexibly.

In a possible implementation, the method may further include:
The second device sends second indication information to the first device, where the second indication information indicates a transmit power.

In this embodiment of the present invention, the second device may further send the second indication information to the second device, and then the first device may re-adjust the transmit power based on the second indication information. It can be learned that the transmit power of the first device may be further controlled by sending the second indication information to the first device, thereby improving the flexibility and the efficiency of power control.

In a possible implementation, the method may further include:
The second device sends third indication information to the first device, where the third indication information indicates a device capability or a device type.

That the second device determines first indication information includes:
The second device determines the first indication information based on the device capability or the device type.

That the second device sends the first indication information to a first device includes:
The second device sends the first indication information to the first device based on the device capability or the device type.

In this embodiment of the present invention, different first devices may have different capabilities, or may be of different types. Therefore, the first device may send the third indication information to the first device, and obtain, through filtering, a first device that is of a specific type or has a specific capability, to perform, in a targeted manner, power control on the first device that is of the specific type or that has the specific capability, thereby improving the efficiency of power control.

According to a third aspect, a power control apparatus is disclosed. The power control apparatus may be a first device, or may be a module (for example, a chip) in the first device. The power control apparatus may include:
a receiving unit, configured to receive first indication information from a second device, where the first indication information indicates a transmit power; and
a determining unit, configured to determine a first transmit power of a first device based on the first indication information, where the first transmit power is less than or equal to a maximum transmit power of the first device.

In a possible implementation, the first indication information is carried in first signaling, second signaling, third signaling, fourth signaling, or fifth signaling, where
the first signaling is for selecting one or more first devices;
the second signaling is for initializing random access of the one or more first devices;
the third signaling is for notifying random access;
the one or more devices include the first device;
the fourth signaling indicates the first device to report a device identifier; and
the fifth signaling is for scheduling data.

In a possible implementation, the fourth signaling further indicates that the first device successfully performs random access.

In a possible implementation, the first signaling is further for changing a status of the selected one or more first devices.

In a possible implementation, the second signaling is broadcast signaling.

In a possible implementation, when the first indication information is carried in the first signaling, the first transmit power is valid in a random access process corresponding to the first signaling;
when the first indication information is carried in the second signaling, the first transmit power is valid in a random access process corresponding to the second signaling;
when the first indication information is carried in the third signaling, the first transmit power is valid in a first time period in a random access process corresponding to the third signaling;
when the first indication information is carried in the fourth signaling, the first transmit power is valid in a unicast communication process corresponding to the fourth signaling; or
when the first indication information is carried in the fifth signaling, the first transmit power is valid in an uplink scheduling periodicity corresponding to the fifth signaling.

In a possible implementation, that the first indication information indicates a transmit power includes:
The first indication information indicates the first transmit power; or
the first indication information indicates an adjustment value, where the adjustment value is a difference between the maximum transmit power of the first device and the first transmit power.

In a possible implementation, the receiving unit is further configured to receive a reference signal from the second device, where the reference signal is a reference signal corresponding to the first indication information.

The determining unit is specifically configured to:
determine the first transmit power of the first device based on a first sequence length and the first indication information, where the first sequence length is a sequence length of the reference signal.

In a possible implementation, the receiving unit is further configured to receive second indication information from the second device, where the second indication information indicates a transmit power.

The determining unit is further configured to determine a second transmit power of the first device based on the second indication information, where the second transmit power is less than or equal to the maximum transmit power of the first device.

Alternatively, the determining unit is further configured to determine a third transmit power of the first device based on the second indication information and the first transmit power, where the third transmit power is less than or equal to the first transmit power.

In a possible implementation, the receiving unit is further configured to receive third indication information from the second device, where the third indication information indicates a device capability or a device type.

That the determining unit determines a first transmit power of the first device based on the first indication information includes:
When the first device supports the device capability or is of the device type, the determining unit determines the first transmit power of the first device based on the first indication information.

In a possible implementation, the maximum transmit power is a maximum transmit power the first device can currently reach.

According to a fourth aspect, a power control apparatus is disclosed. The power control apparatus may be a second device, or may be a module (for example, a chip) in the second device. The power control apparatus may include:
a first determining unit, configured to determine first indication information, where the first indication information indicates a transmit power; and
a sending unit, configured to send the first indication information to a first device.

In a possible implementation, the first indication information is carried in first signaling, second signaling, third signaling, fourth signaling, or fifth signaling, where
the first signaling is for selecting one or more first devices;
the second signaling is for initializing random access of the one or more first devices;
the third signaling is for notifying random access;
the one or more devices include the first device;
the fourth signaling indicates the first device to report a device identifier; and
the fifth signaling is for scheduling data.

In a possible implementation, the fourth signaling further indicates that the first device successfully performs random access.

In a possible implementation, the first signaling is further for changing a status of the selected one or more first devices.

In a possible implementation, the second signaling is broadcast signaling.

In a possible implementation, when the first indication information is carried in the first signaling, a first transmit power is valid in a random access process corresponding to the first signaling;
when the first indication information is carried in the second signaling, a first transmit power is valid in a random access process corresponding to the second signaling;
when the first indication information is carried in the third signaling, a first transmit power is valid in a first time period in a random access process corresponding to the third signaling;
when the first indication information is carried in the fourth signaling, a first transmit power is valid in a unicast communication process corresponding to the fourth signaling; or
when the first indication information is carried in the fifth signaling, a first transmit power is valid in an uplink scheduling periodicity corresponding to the fifth signaling.

In a possible implementation, that the first indication information indicates a transmit power includes:
The first indication information indicates the first transmit power; or
the first indication information indicates an adjustment value, where the adjustment value is a difference between a maximum transmit power of the first device and the first transmit power.

In a possible implementation, the apparatus may further include:
a second determining unit, configured to determine a first sequence length.

The sending unit is further configured to send a reference signal to the first device, where the reference signal is a reference signal corresponding to the first indication information, and a sequence length of the reference signal is the first sequence length.

In a possible implementation, the sending unit is further configured to send second indication information to the first device, where the second indication information indicates a transmit power.

In a possible implementation, the sending unit is further configured to send third indication information to the first device, where the third indication information indicates a device capability or a device type.

The first determining unit is specifically configured to:
determine the first indication information based on the device capability or the device type.

That the sending unit sends the first indication information to a first device includes:
The sending unit sends the first indication information to the first device based on the device capability or the device type.

According to a fifth aspect, a power control apparatus is disclosed. The power control apparatus may be a first device or a module (for example, a chip) in the first device. The power control apparatus may include a processor, a memory, and a transceiver. The transceiver is configured to: receive information from another power control apparatus other than the power control apparatus, and output information to the another power control apparatus other than the power control apparatus. When the processor executes a computer program stored in the memory, the processor is enabled to perform the power control method disclosed in the first aspect or any implementation of the first aspect.

According to a sixth aspect, a power control apparatus is disclosed. The power control apparatus may be a second device or a module (for example, a chip) in the second device. The power control apparatus may include a processor, a memory, and a transceiver. The transceiver is configured to: receive information from another power control apparatus other than the power control apparatus, and output information to the another power control apparatus other than the power control apparatus. When the processor executes a computer program stored in the memory, the processor is enabled to perform the power control method disclosed in the second aspect or any implementation of the second aspect.

According to a seventh aspect, a power control system is disclosed. The power control system includes the power control apparatus in the fifth aspect and the power control apparatus in the sixth aspect.

According to an eighth aspect, a computer-readable storage medium is disclosed. The computer-readable storage medium stores a computer program or computer instructions, and when the computer program or the computer instructions are run, the power control method disclosed in the foregoing aspects is implemented.

According to a ninth aspect, a chip is disclosed, and includes a processor, configured to execute a program stored in a memory. When the program is executed, the chip is enabled to perform the power control method disclosed in the foregoing aspects.

In a possible implementation, the memory is located outside the chip.

According to a tenth aspect, a computer program product is disclosed. The computer program product includes computer program code. When the computer program code is run, the power control method is performed.

### BRIEF DESCRIPTION OF DRAWINGS

To describe technical solutions in embodiments of the present invention more clearly, the following briefly describes the accompanying drawings used in describing embodiments. It is clear that, the accompanying drawings in the following descriptions show merely some embodiments of the present invention, and a person of ordinary skill in the art may still derive other drawings from these accompanying drawings without creative efforts.
FIG. 1 is a diagram of a network architecture according to an embodiment of the present invention;
FIG. 2 is a diagram of another network architecture according to an embodiment of the present invention;
FIG. 3 is a diagram of still another network architecture according to an embodiment of the present invention;
FIG. 4 is a diagram of transmission by a reader/writer according to an embodiment of the present invention;
FIG. 5 is a diagram of an inventory process according to an embodiment of the present invention;
FIG. 6 is a diagram of unicast communication between a tag and a reader/writer according to an embodiment of the present invention;
FIG. 7 is a schematic flowchart of a power control method according to an embodiment of the present invention;
FIG. 8 is a diagram of power control according to an embodiment of the present invention;
FIG. 9 is another diagram of power control according to an embodiment of the present invention;
FIG. 10 is still another diagram of power control according to an embodiment of the present invention;
FIG. 11 is still another diagram of power control according to an embodiment of the present invention;
FIG. 12A and FIG. 12B are still another diagram of power control according to an embodiment of the present invention;
FIG. 13A and FIG. 13B are still another diagram of power control according to an embodiment of the present invention;
FIG. 14A and FIG. 14B are still another diagram of power control according to an embodiment of the present invention;
FIG. 15 is a diagram of a structure of a power control apparatus according to an embodiment of the present invention;
FIG. 16 is a diagram of a structure of another power control apparatus according to an embodiment of the present invention;
FIG. 17 is a diagram of a structure of still another power control apparatus according to an embodiment of the present invention;
FIG. 18 is a diagram of a structure of still another power control apparatus according to an embodiment of the present invention; and
FIG. 19 is a diagram of a structure of a power control system according to an embodiment of the present invention.

### DESCRIPTION OF EMBODIMENTS

Embodiments of the present invention disclose a power control method and apparatus, and a computer-readable storage medium, to reduce interference caused by a tag with another communication device. The following clearly and completely describes the technical solutions in embodiments of this application with reference to the accompanying drawings in embodiments of this application.

It is clear that the described embodiments are merely some but not all of embodiments of this application. "Embodiment" mentioned in the specification means that a particular feature, structure, or characteristic described with reference to embodiments may be included in at least one of embodiments of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with another embodiment. All other embodiments obtained by a person of ordinary skill in the art based on embodiments of this application without creative efforts shall fall within the protection scope of this application.

In the specification, claims, and accompanying drawings of this application, the terms "first", "second", "third", and the like are used to distinguish between different objects but do not indicate a particular order. In addition, terms such as "include", "have", and any other variants thereof are intended to cover a non-exclusive inclusion. For example, a series of steps or units are included; optionally, a step or unit that is not listed is further included; or optionally, another inherent step or unit of the process, the method, the product, or the device is further included.

The accompanying drawings show only a part rather than all content related to this application. Before example embodiments are discussed in more detail, it should be mentioned that some example embodiments are described as processing or methods depicted as flowcharts. Although the flowchart describes operations (or steps) as sequential processing, many of the operations can be implemented in parallel, concurrently, or simultaneously. In addition, the sequence of the operations may be rearranged. The processing may be terminated upon completion of its operation, but may further have additional steps not included in the accompanying drawings. The processing may correspond to a method, a function, a procedure, a subroutine, a subprogram, or the like.

Terminologies such as "component", "module", "system", and "unit" used in this specification are used to indicate computer-related entities, hardware, firmware, combinations of hardware and software, software, or software being executed. For example, a unit may be, but is not limited to, a process running on a processor, a processor, an object, an executable file, an execution thread, or a program, and/or may be distributed between two or more computers. In addition, these units may be executed from various computer-readable media storing various data structures. For example, the units may communicate with each other based on signals of one or more data packets (for example, second unit data exchanged with a local system, a distributed system, and/or another unit between networks such as an internet interacting with another system through signals) by using a local and/or remote process.

To better understand embodiments of the present invention, the following first describes a network architecture used in embodiments of the present invention.

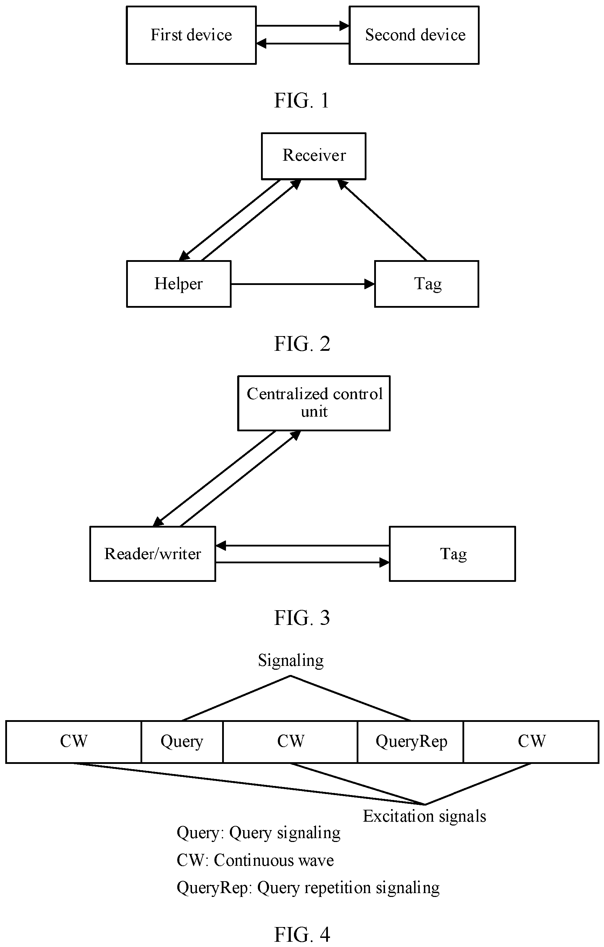

FIG. 1 is a diagram of a network architecture according to an embodiment of the present invention. FIG. 1 may alternatively be understood as a diagram of a system architecture. As shown in FIG. 1, the network architecture may include a first device and a second device. The first device may include one or more first devices (one first device is shown in FIG. 1), and the second device may include one or more second devices (one second device is shown in FIG. 1).

The first device and the second device may communicate with each other. Communication between the first device and the second device may include uplink communication (namely, communication from the first device to the second device) and downlink communication (namely, communication from the second device to the first device). During uplink communication, the first device may be configured to send an uplink signal to the second device, and the second device may be configured to receive the uplink signal from the first device. During downlink communication, the second device may be configured to send a downlink signal to the first device, and the first device may be configured to receive the downlink signal from the second device. A link corresponding to uplink communication may be referred to as an uplink or a reverse link, and a link corresponding to downlink communication may be referred to as a downlink or a forward link.

It should be noted that the network architecture shown in FIG. 1 is not limited to including only the first device and the second device that are shown in the figure.

The first device may be a data carrier for storing data. In a radio frequency identification scenario, the first device may be a tag (tag), where the tag may also be referred to as an electronic tag, a radio frequency tag, a transponder, or the like. The tag may be used as a data carrier for storing data. The tag may also be attached to an item, and may store information about the item, for example, information such as a type of the item. In addition, the tag has low costs. This facilitates large-scale production and usage.

The second device may be a read/write device having a radio frequency identification function. In the radio frequency identification scenario, the second device may be a reader/writer, where the reader/writer may also be referred to as a reader (reader). The reader/writer may read data stored in a tag, and may also perform some processing on the data in the tag (for example, write data into the tag, and update the data).

Based on the network architecture in FIG. 1, when the first device is the tag and the second device is the reader/writer, the following describes another two derived network architectures. When the reader/writer is of a separated architecture, the reader/writer may be split into two parts: a receiver (receiver) and a helper (helper), as shown in FIG. 2. Unidirectional communication may be performed between the tag and the receiver, that is, the tag may send a signal to the receiver, and the receiver may receive the signal from the tag. Bidirectional communication may be performed between the receiver and the helper, that is, the receiver and the helper may mutually send and receive a signal. Unidirectional communication may be performed between the helper and the tag, that is, the helper may send a signal to the tag, and the tag may receive the signal from the helper. The helper may send an excitation signal to the tag, or may forward, to the tag, data or signaling sent by the receiver, and the receiver may receive a reflection signal (namely, an uplink signal) from the tag, generate transmission content (data or signaling), and send the generated transmission content and the like to the helper. A link corresponding to communication from the tag to the receiver may be referred to as an uplink or a reverse link, and a link from the helper to the tag may be referred to as a downlink or a forward link. A communication link between the receiver and the helper may be referred to as a fronthaul link. Specifically, a link corresponding to communication from the receiver to the helper may be referred to as a fronthaul downlink, and a link corresponding to communication from the helper to the receiver may be referred to as a fronthaul uplink. It should be understood that, when the reader/writer is of the separated architecture, that the reader/writer sends information to the tag means: The helper of the reader/writer sends the information to the tag; and that the reader/writer receives information from the tag means: The receiver of the reader/writer receives the information from the tag.

It should be noted that the communication between the helper and the receiver may be performed by using a 5^{th} generation mobile communication (5th generation mobile communication, 5G) new radio (new radio, NR) technology, or may be performed by using another communication technology such as a 5G sidelink (sidelink) technology. This is not limited in embodiments of the present invention. When the 5G NR technology is used, after generating the transmission content (the signaling or the data), the receiver may send the transmission content (the signaling or the data) to the helper by using the 5G NR technology, and the helper may forward the signaling or the data on the forward link.

When the reader/writer is of a centralized architecture or an integrated architecture (that is, the reader/writer is not split into the helper and the receiver), the network architecture shown in FIG. 1 may further include a centralized control unit, as shown in FIG. 3. Bidirectional communication may be performed between the reader/writer and the centralized control unit, and the centralized control unit may schedule, control, or perform other processing on resources of a forward link used by the reader/writer, sending behavior of the reader/writer, and the like. In some embodiments, the reader/writer may be a base station (for example, a macro base station, a micro base station, or a pole base station), a module in the base station, a user equipment (user equipment, UE), or a module in the UE. The centralized control unit may be a radio access network (radio access network, RAN) device. The radio access network device is an apparatus that is deployed on a radio access network and that provides a wireless communication function for other devices (for example, various terminal devices). The radio access network device may include base stations (base stations, BSs) in various forms. Alternatively, the centralized control unit may be a core network device, a server, or the like, or the centralized control unit may be a module in the core network device, the server, or other devices. It should be understood that the communication between the reader/writer and the centralized control unit may be performed by using the 5G NR technology, a 5G sidelink technology, or the like.

It should be understood that the network architectures shown in FIG. 1, FIG. 2, and FIG. 3 are merely examples for description, and constitute no limitation thereto.

It should be noted that, the helper or the reader/writer may perform continuous transmission on the forward link, and may send the excitation signal or may send the signaling (for example, signaling such as query (Query) signaling or query repetition (QueryRep) signaling) or the data. The excitation signal may be a continuous wave (continuous wave, CW). FIG. 4 is a diagram of transmission by a reader/writer according to an embodiment of the present invention. As shown in FIG. 4, the reader/writer may send an excitation signal CW, where the excitation signal may provide energy for the reader/writer, and may be used as a carrier for uplink reflection communication and the like by a tag. The reader/writer may continue to send Query signaling, to initialize an inventory process, and the like. Then, the reader/writer may send an excitation signal CW again, along with QueryRep signaling and the like.

To better understand embodiments of the present invention, the following first describes related technologies in embodiments of the present invention.

A radio frequency identification technology is a non-contact automatic identification technology. An RFID identification function is mainly implemented by a reader/writer and a tag. The reader/writer may provide energy for the tag by sending an excitation signal to the tag, and the reader/writer may also send signaling or data to the tag. Correspondingly, the tag may receive the signaling or data sent by the reader/writer, respond based on the signaling or data sent by the reader/writer, and send signaling or data in a reflection signal to the reader/writer, for example, send an electronic product code (electronic product code, EPC) number to the reader/writer, locally store the data sent by the reader/writer, and obtain information about an item (such as a category and a location of the item) corresponding to the tag. In the foregoing manner, the reader/writer may identify an identity (identity document, ID) of the tag, that is, the reader/writer may inventory the tag. In addition, the reader/writer may further perform a read/write operation or other operations on the tag. It should be noted that, the inventory may be understood as a process in which the reader/writer obtains the ID (for example, an EPC) of the tag.

The tag may be classified into a passive tag, a semi-passive tag, an active tag, and the like. The semi-passive tag may also be referred to as a semi-active tag. For the passive tag, the reader/writer needs to provide an excitation signal, and a part of energy of the excitation signal may be for internal processing such as encoding/decoding or modulation/demodulation on the tag, and the excitation signal may further be used as a carrier to carry uplink information of the tag for reflection (that is, used by the tag to send an uplink signal to the reader/writer). The semi-passive tag may include a battery (such as a solar cell), and the internal processing such as encoding/decoding or modulation/demodulation on the tag may be performed through the battery. In addition, the reader/writer may send an excitation signal as a reflection carrier of the tag.

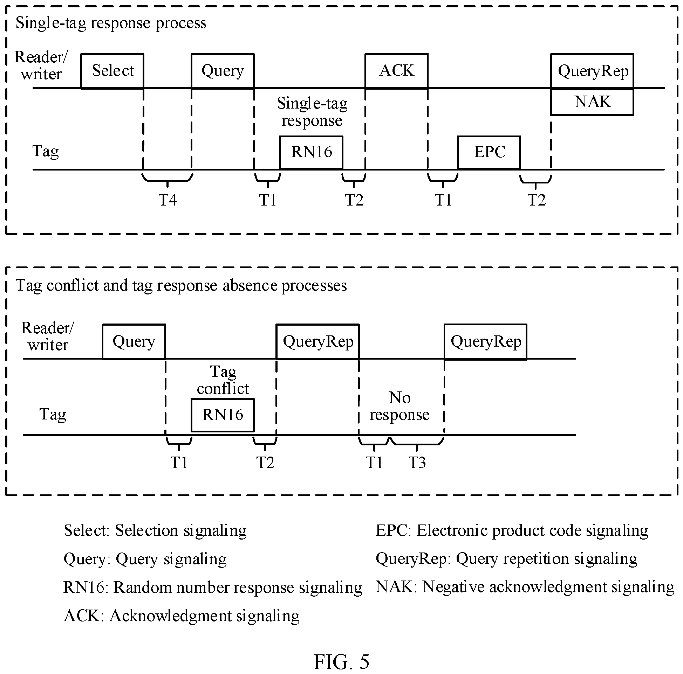

Based on the foregoing network architecture, the following describes a process of performing inventorying between the reader/writer and the tag. FIG. 5 is a diagram of an inventory process according to an embodiment of the present invention. As shown in FIG. 5, the inventory process may include the following steps.

A reader/writer may first send Select (Select) signaling to a tag. The Select signaling may include indication information for filtering tags, where the indication information may indicate a tag. For example, the indication information may indicate a specific ID or indicate a tag with a specific part included in an ID of the tag (for example, a tag whose first four bits of an EPC are 0011), so that one or more tags may be selected accordingly. In addition, the Select signaling may also change a status (for example, an inventory flag or another flag) of the selected one or more tags. When the inventory flag of the selected one or more tags needs to be changed, the Select signaling may indicate a value of the inventory flag of the selected one or more tags (for example, the value of the inventory flag is set to A). The ID of the tag may be the EPC of the tag, may be a tag identifier (tag identifier, TID), or may be other information that can be for identifying the tag.

It should be noted that the Select signaling is broadcast signaling (common signaling). Therefore, all tags in a communication range of the reader/writer (namely, a range in which the reader/writer can identify the tags) can receive the Select signaling sent by the reader/writer. After the tag receives the Select signaling from the reader/writer, the tag may first determine whether the tag meets or satisfies a filtering condition indicated by the reader/writer in the Select signaling (for example, the first four bits of the EPC of the tag are 0011). When the tag determines that the tag does not meet the filtering condition (for example, the first four bits of the EPC of the tag are 0101), the tag may not need to adjust the inventory flag of the tag based on the Select signaling. When the tag determines that the tag meets the filtering condition, the tag may adjust the value of the inventory flag of the tag based on an indication in the Select signaling (for example, change the value of the inventory flag to A). For one round of inventory process, the Select signaling is optional. Therefore, there may be no Select signaling before one round of inventory (for example, one piece of Select signaling may be followed by a plurality of rounds of inventory processes initialized via Query), or there may be Select signaling before each round of inventory process. When there is no Select signaling before one round of inventory process, the reader/writer may directly send the Query signaling to start inventory.

After sending the Select signaling to the tag, the reader/writer may continue to send the Query signaling, where the Query signaling may be for initializing one round of inventory process or one inventory process. A round of inventory process may be understood as a process of identifying the one or more tags. The round of inventory process may start with one piece of Query signaling. The Query signaling may be followed by N pieces of QueryRep signaling, where N is an integer greater than or equal to 0. An end sign of the round of inventory may be that a next piece of Query signaling appears, or there is no tag feeding back RN16 signaling after a plurality of pieces of QueryRep signaling, or (2^{Q}-1) pieces of QueryRep signaling have been sent. The Query signaling may also include indication information for filtering tags, where the indication information may indicate a tag of a specific type to participate in this round of inventory process. For example, a tag whose inventory flag is a value (for example, a value of the inventory flag is A) may be specified to participate in this round of inventory process. In addition, the Query signaling may further indicate a value range of a counter (counter). For example, the Query signaling may indicate a Q value, and a value range corresponding to the Q value is [0, 2^{Q}-1].

The Query signaling is also broadcast signaling (common signaling). Therefore, all the tags in the communication range of the reader/writer can receive the Query signaling sent by the reader/writer. When the tag receives the Query signaling, the tag may first determine whether the tag meets or satisfies the filtering condition indicated by the reader/writer in the Query signaling (for example, the value of the inventory flag is A). When the tag determines that the tag does not meet the filtering condition (for example, a value of an inventory flag of the tag is B), the tag may not need to initialize a counter of the tag based on the Query signaling, and may not need to participate in this round of inventory process, that is, may not need to respond to QueryRep signaling and other signaling subsequently sent by the reader/writer. When the tag determines that the tag meets the filtering condition, the tag may determine the value range of the counter based on an indication in the Query signaling, and then randomly select a value in the range to initialize a counter of the tag (for example, if the Q value is 2, the tag may randomly select a value in a range of [0, 3] to initialize the counter of the tag). When the value of the counter of the tag is 0, the tag may send random number response (RN16) signaling to the reader/writer, where the RN16 signaling may carry a 16-bit random number, and the 16-bit random number may be used as a temporary ID of the tag. The RN16 signaling may also be understood as inventory request signaling, and may be used by the tag to request the reader/writer to inventory the tag. For example, if the tag initializes the value of the counter of the tag to be exactly 0 after receiving the Query signaling from the reader/writer, the tag needs to send the RN16 signaling to the reader/writer.

It should be noted that the Query signaling may further include indication information for indicating a transmission parameter, for example, an uplink transmission parameter such as an uplink transmission rate, an uplink transmission bit rate, uplink transmission repetitions, or uplink transmission bandwidth. Correspondingly, after the tag receives the Query signaling, when transmission needs to be performed, the tag may perform transmission based on the uplink transmission parameter indicated in the Query signaling.

In a case, after the reader/writer sends query-type signaling (such as the Query signaling or the QueryRep signaling), there may be a plurality of tags with counters whose values are 0. In this case, all the plurality of tags may feed back a plurality of pieces of RN16 signaling to the reader/writer. Correspondingly, the reader/writer may receive the plurality of pieces of RN16 signaling from the plurality of tags. In this case, a conflict occurs between the plurality of pieces of RN16 signaling, that is, a conflict occurs between the tags, and the reader/writer may fail to perform processing correctly. In this case, the reader/writer may directly perform new query without sending acknowledge (acknowledge, ACK) signaling. For example, the reader/writer sends the QueryRep signaling, and may skip the tags in conflict and directly perform a subsequent inventory process. Reference may be made to a tag conflict process shown in FIG. 5.

In another case, due to some reasons (for example, after the reader/writer sends the Query or QueryRep signaling, there is no tag with a counter whose value is 0, and therefore, no tag may respond), after sending the query-type signaling, the reader/writer may receive no RN16 signaling from the tag. Therefore, when the RN16 signaling fed back by the tag is not received (namely, detected) by the reader/writer, the reader/writer may directly perform a subsequent inventory process, for example, send QueryRep. Reference may be made to a tag response absence process (namely, a response absence process) shown in FIG. 5.

In still another case, the reader/writer may receive RN16 signaling from a single tag, and then the reader/writer may confirm that inventory is normal, respond to the single tag, and send ACK signaling. Reference may be made to a single-tag response process shown in FIG. 5. The ACK signaling may include the 16-bit random number previously fed back by the tag. In addition, it should be understood that the ACK signaling may be unicast signaling, and may be specific to only a single tag, where the ACK signaling carries a 16-bit random number previously sent by a tag.

Correspondingly, the tag may receive the ACK signaling from the reader/writer, and then the tag may send EPC signaling to the reader/writer. The EPC signaling may include an ID of the tag, for example, an EPC and a TID. Then, if the reader/writer can correctly receive the EPC signaling from the tag, the reader/writer may perform unicast communication with the tag, or may send a next piece of query-type signaling, for example, QueryRep signaling. It should be understood that the QueryRep signaling is also broadcast signaling (common signaling). Therefore, all the tags in the communication range of the reader/writer can receive the QueryRep signaling sent by the reader/writer. After the tag sends the EPC signaling to the reader/writer, if the tag receives the QueryRep signaling from the reader/writer, the tag may determine that the tag has been successfully inventorized (that is, the reader/writer correctly receives the EPC signaling sent by the tag), and the tag may change a value of an inventory flag of the tag, for example, flip the inventory flag (for example, flip the value of the inventory flag from A to B, where if the value of the inventory flag is A, it indicates that the tag has not been inventorized; or if the value of the inventory flag is B, it indicates that the tag has been successfully inventorized). If the reader/writer does not correctly receive the EPC signaling from the tag, the reader/writer may send negative acknowledge (NAK) signaling to the tag, to indicate that inventory of the tag fails. After receiving the NAK signaling from the reader/writer, the tag may determine that inventory of the tag fails, may not change the inventory flag of the tag, and may wait for next inventory.

When the tag in the communication range of the reader/writer receives the QueryRep signaling sent by the reader/writer, the tag may decrease the value of the counter of the tag by 1. After decreasing the value of the counter of the tag by 1, the tag may determine whether the value of the counter of the tag changes to 0. When the value of the counter of the tag is 0, the tag may send the RN16 signaling to the reader/writer.

It should be understood that, during inventory, the reader/writer may further send query adjustment (QueryAdjust) signaling to the tag, where the signaling may be for resetting the value range of the counter. A new value range may be the same as the original value range, or may be different from the original value range. In addition, the signaling may indicate the tag to re-initialize the value of the counter of the tag based on the new value range.

The following describes time intervals T1, T2, T3, and T4 in FIG. 5.

T1 may be understood as a time interval between a moment at which the reader/writer ends sending signaling and a moment at which the tag starts to send signaling (where the signaling may be response signaling corresponding to the signaling previously sent by the reader/writer, such as the Query signaling or the RN16 signaling). T2 may be understood as a time interval between a moment at which the tag ends sending the signaling and a moment at which the reader/writer starts to send signaling (where the signaling may be response signaling corresponding to the signaling previously sent by the tag, such as the RN16 signaling or the ACK signaling). T3 may be understood as a delay for which the reader/writer needs to additionally wait for extra time when no tag provides feedback within a period of time since the reader/writer sends signaling to the tag during inventorying the tag by the reader/writer. T4 may be understood as a time interval between a moment at which the reader/writer ends sending one piece of signaling and a moment at which the reader/writer starts to send a next piece of signaling. In this case, the two pieces of signaling are two pieces of signaling that are sent continuously, and there is no signaling, fed back by the tag, between the two pieces of signaling.

It should be understood that the inventory process shown in FIG. 5 is merely an example for description, and constitutes no limitation thereto.

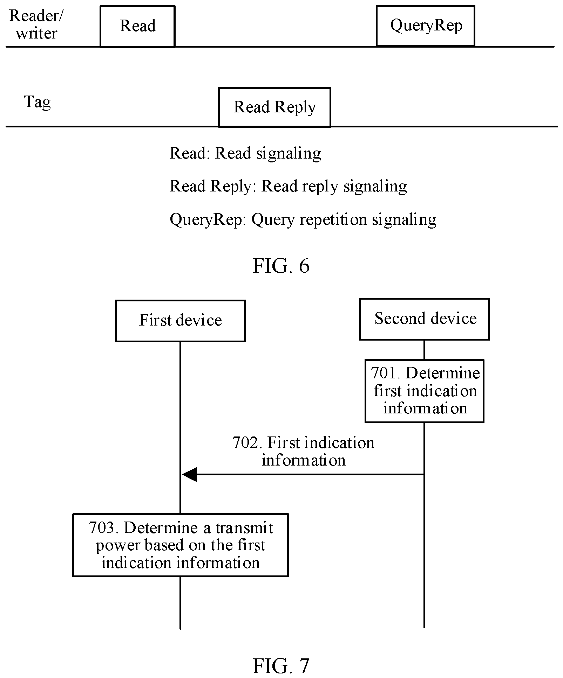

It should be noted that, after successfully inventorying a tag (for example, after receiving an EPC sent by the tag), the reader/writer may perform unicast communication with the tag, and may perform a read/write operation or other operations on the tag. FIG. 6 is a diagram of unicast communication between a tag and a reader/writer according to an embodiment of the present invention. As shown in FIG. 6, after a reader/writer receives an EPC from a tag, the reader/writer may send a read (Read) command to the tag, where the read command may indicate content that needs to be read (for example, content in a storage region of the tag). When the tag receives the read command from the reader/writer, the tag may send a read reply (Read Reply) command to the reader/writer, and feed back the content that needs to be read by the reader/writer. Then, the reader/writer may further continue to send the read command, to read other content in the storage region of the tag; or the reader/writer may send another command (for example, a write command) to the tag, to perform another operation on the tag. When the reader/writer needs to end the unicast communication with the tag, the reader/writer may send commands such as QueryRep, Query Adjust, and Query as in a normal inventory process. Correspondingly, the tag may receive the commands such as QueryRep, Query Adjust, and Query sent by the reader/writer, and then the tag may determine that the unicast communication for the tag has ended.

It should be understood that the unicast communication between the tag and the reader/writer shown in FIG. 6 is merely an example for description, and constitutes no limitation thereto.

Currently, during inventory on the tag, when communication is performed between the tag and the reader/writer, the tag always sends an uplink signal to the reader/writer at a maximum transmit power. However, in some cases, even if the tag sends the uplink signal at a reduced power, the tag can still meet an uplink coverage requirement. In other words, when the tag reduces the uplink transmit power to some extent, the tag can still communicate with the reader/writer normally. In addition, when the tag sends the uplink signal at the reduced power, power consumption of the tag can be reduced. For the tag (for example, a tag including an energy storage circuit or battery inside) that needs to store energy for communication, time in which the tag sends signals can be prolonged, so that more information can be sent. In addition, if the transmit power of the tag is too high, interference with another surrounding communication device is prone to be caused, and communication quality of the another communication device is reduced. Therefore, how to perform effective power control on the tag, improve operating efficiency of the tag (for example, prolong the time for sending the signal), and reduce the interference caused by the tag with another communication device is an issue of concern of a person skilled in the art.

Based on the foregoing network architecture, refer to FIG. 7, FIG. 7 is a schematic flowchart of a power control method according to an embodiment of the present invention. As shown in FIG. 7, the power control method may include the following steps.

701. A second device determines first indication information.

During communication between a first device and the second device, if a transmit power of the first device is excessively high, interference with another surrounding communication device is prone to be caused, and communication quality of the another communication device is reduced. Based on this, the second device may control the transmit power of the first device to some extent, so that the transmit power of the first device is adjusted, thereby reducing the interference caused by the first device with the another surrounding communication device.

Before the second device inventorizes the first device, or in a process in which the second device inventorizes the first device, the second device may first determine the first indication information to adjust an uplink transmit power of the first device. The first indication information indicates a transmit power. The first indication information may also be referred to as power control indication information (namely, indication information for adjusting the transmit power).

The first indication information indicates the transmit power. The first indication information may indicate the transmit power in two manners. In one manner, the first indication information indicates an adjustment value. In the other manner, the first indication information directly indicates an absolute power value. It is assumed that a transmit power obtained through adjustment by the first device via the first indication information sent by the second device is a first transmit power (that is, the transmit power obtained through adjustment by the first device based on the first indication information is the first transmit power). The following describes the two indication manners of the first indication information.

The first indication information may indicate the adjustment value (namely, a power adjustment value). The adjustment value may be a specific decibel (dB) value. The decibel value may be a difference between a maximum transmit power of the first device and the first transmit power. Alternatively, the decibel value may be a difference between a current transmit power of the first device and the first transmit power. The maximum transmit power of the first device may be understood as a maximum transmit power the first device can currently reach (namely, a maximum transmit power the first device can reach when sending an uplink signal).

The first indication information may indicate the adjustment value via one or more bits. A larger quantity of bits for indicating the adjustment value indicates more different adjustment values (that is, there may be more different adjustment levels). When the adjustment value is indicated via the one or more bits, the adjustment value may be directly indicated via a corresponding bit value. For example, 00 may indicate a decrease by 0 dB, 01 may indicate a decrease by 1 dB, 10 may indicate a decrease by 2 dB, and 11 may indicate a decrease by 3 dB. Alternatively, when the adjustment value is adjusted via the one or more bits, the adjustment value may alternatively be indirectly indicated via a corresponding bit value. For example, 00 may indicate 0 dB, 01 may indicate a decrease by 3 dB, 10 may indicate a decrease by 5 dB, and 11 may indicate a decrease by 10 dB. In this case, 00, 01, 10, and 11 may be considered as decibel indexes, 0 dB, 3 dB, 5 dB, and 10 dB are decibel values corresponding to the decibel indexes, and one decibel index may correspond to one decibel value.

The following uses examples to describe a case in which the first indication information indicates the adjustment value via one bit or two bits. The first indication information may indicate the adjustment value via one bit, and may indicate two different adjustment values. When a value of the bit is 0, it may indicate a decrease by 0 dB, or indicate the first device to send the uplink signal at the maximum transmit power. Alternatively, when a value of the bit is 1, it may indicate a decrease by x dB, that is, indicate the first device to send the uplink signal at a power obtained by decreasing the maximum transmit power or the current transmit power by x dB, where x>0. Alternatively, the first indication information may indicate the adjustment value via two bits, and may indicate four different adjustment values. When the two bits have a value of 00, it may indicate a decrease by 0 dB, or indicate the first device to send the uplink signal at the maximum transmit power. Alternatively, when the two bits have a value of 01, it may indicate a decrease by x1 dB, that is, indicate the first device to send the uplink signal at a power obtained by decreasing the maximum transmit power or the current transmit power by x1 dB. Alternatively, when the two bits have a value of 10, it may indicate a decrease by x2 dB. Alternatively, when the two bits have a value of 11, it may indicate a decrease by x3 dB. Values of x 1, x2, and x3 are all greater than 0 and are different. Similarly, that the first indication information indicates the adjustment value via more bits (for example, three bits or five bits) is similar to a case in which the adjustment value is indicated via one bit or two bits. Details are not described herein again.

It should be understood that, if there are more bits for indicating the adjustment value, more flexible and precise adjustment and control may be performed on the power of the first device, thereby improving efficiency of power adjustment and control. When the first indication information occupies one bit, a quantity of bits that need to be transmitted is small, and transmission resources can be reduced. In addition, this manner is simple and has a low requirement on a capability of the first device. In addition, the first indication information may also indicate the first device to increase the transmit power. For example, when indication is performed via two bits, 00 may indicate an increase by x1 dB, 01 may indicate an increase by x2 dB, 10 may indicate a decrease by x1 dB, and 11 may indicate a decrease by x2 dB. In some embodiments, the one or more bits may indicate only specific decibel (dB) values. For example, when indication is performed via two bits, 00 may indicate x1 dB, 01 may indicate x2 dB, 10 may indicate x3 dB, and 11 may indicate x4 dB. In this case, to distinguish between an increase of the transmit power and a decrease of the transmit power, one bit may be additionally added. When a value of the bit is 0, it may indicate to decrease the transmit power. When a value of the bit is 1, it may indicateto increase the transmit power. For example, 000 may indicate a decrease by x1 dB, 100 may indicate an increase by x1 dB, 001 may indicate a decrease by x2 dB, 101 may indicate an increase by x2 dB, 010 may indicate a decrease by x3 dB, 110 may indicate an increase by x3 dB, 011 may indicate a decrease by x4 dB, and 111 may indicate an increase by x4 dB. Values of x 1, x2, x3, and x4 are all greater than 0 and are different.

The first indication information may alternatively indicate the absolute power value (namely, a specific power value). For example, the first indication information may directly indicate the first transmit power, that is, indicate the first device to adjust the transmit power of the first device to the first transmit power.

The first indication information may indicate the power value via one or more bits. A larger quantity of bits for indicating the power value indicates more different power values (that is, there may be more different adjustment power values). When the power value is indicated via the one or more bits, the power value may be directly indicated via a corresponding bit value. For example, 00 may indicate 0 dBm, 01 may indicate 1 dBm, 10 may indicate 2 dBm, and 11 may indicate 3 dBm. Alternatively, when the power value is indicated via the one or more bits, the power value may alternatively be indirectly indicated via a corresponding bit value. For example, 00 may indicate 0 dBm, 01 may indicate 3 dBm, 10 may indicate 5 dBm, and 11 may indicate 10 dBm. In this case, 00, 01, 10, and 11 may be considered as power indexes, 0 dBm, 3 dBm, 5 dBm, and 10 dBm are power values corresponding to the power indexes, and one power index may correspond to one power value.

The following uses examples to describe a case in which the first indication information indicates the power value via one bit or two bits. The first indication information may indicate the power value via one bit, and may indicate two different power values. When a value of the bit is 0, it may indicate y1 dBm, that is, indicate the first device to send the uplink signal at y1 dBm. Alternatively, when a value of the bit is 1, it may indicate y2 dBm, that is, indicate the first device to send the uplink signal at y2 dBm. Alternatively, the first indication information may indicate the power value via two bits, and may indicate four different power values. When the two bits have a value of 00, it may indicate y1 dBm, that is, indicate the first device to send the uplink signal at y1 dBm. Alternatively, when the two bits have a value of 01, it may indicate y2 dBm, that is, indicate the first device to send the uplink signal at y2 dBm. Alternatively, when the two bits have a value of 10, it may indicate y3 dBm. Alternatively, when the two bits have a value of 11, it may indicate y4 dBm. Values of y1, y2, y3, and y4 are different. Similarly, that the first indication information indicates the power value via more bits (for example, three bits or five bits) is similar to a case in which the power value is indicated via one bit or two bits. Details are not described herein again. It should be understood that, if there are more bits for indicating the power value, more flexible adjustment and control may be performed on the power of the first device, thereby improving efficiency of power adjustment and control.

It should be understood that the foregoing case in which the adjustment value or the absolute power value is indicated via the one or more bits is merely an example for description, and constitutes no limitation thereto. For example, the adjustment value indicated by the first indication information may alternatively be a fraction, indicating that the transmit power is a fraction (for example, 3/5) of the maximum transmit power or the current transmit power, or a decimal, indicating that the transmit power is a multiple (for example, 0.7 times) of the maximum transmit power or the current transmit power. In addition, the second device may further perform power adjustment and control in a combination of the foregoing two manners, to perform more flexible power adjustment and control on the first device. For example, when the second device performs power control on the first device for the first time, the second device may first indicate an absolute power value (for example, indicate the y3 dBm via the two bits with the value of 10). Then, when the second device performs power control on the first device for the second time, the second device may indicate an adjustment value (for example, indicate the decrease by x2 dB via the two bits with the value of 10). In addition, to help the first device adjust the power in a correct manner after receiving the power control indication information from the second device, the second device may further send corresponding power control type indication information when sending the power control indication information. The power control type indication information indicates whether the power control indication information indicates the adjustment value or the power value. For example, the power control type indication information occupies one bit. When a value of the bit is 0, it indicates that the power control type indication information indicates the adjustment value. When a value of the bit is 1, it indicates that the power control type indication information indicates the power value. Therefore, when sending the power control indication information for the first time, the second device may send 1-bit power control type indication information 1, and when sending the power control indication information for the second time, the second device may send 1-bit power control type indication information 0. Correspondingly, the first device may receive the power control indication information and the corresponding power control type indication information from the second device, and then the first device may adjust the transmit power based on the power control indication information and the corresponding power control type indication information. Specifically, after receiving power control indication information 10 and the power control type indication information 1 for the first time, the first device may determine that the power control indication information 10 indicates the y3 dBm. After receiving the power control indication information 10 and the power control type indication information 0 for the second time, the first device may determine that the power control indication information 10 indicates the decrease by x2 dB.

When determining the first indication information, the second device may receive no signal from the first device, or may have received a signal from the first device. In the two different cases, the second device may determine the first indication information in different manners. Descriptions of the manners are separately provided below.

When the second device determines the first indication information, if the second device receives no signal from the first device, the second device does not know an appropriate value by which the transmit power of the first device is to be decreased. If the value is too large, it is possible that a signal from the first device cannot be received by the second device. Therefore, the second device may first indicate the first device to directly send the signal at the maximum power, or indicate a high transmit power (where the transmit power may be less than the maximum transmit power of the first device) for the first device, or indicate the first device to first decrease the transmit power by a small value (for example, 1 dB or 3 dB). Then, if the second device receives the signal sent by the first device, and determines that the transmit power of the first device may be further decreased (for example, the transmit power of the first device may be further decreased by 0 dB to 8 dB when normal communication is ensured), the second device may further adjust the transmit power of the first device (for example, further decrease the transmit power of the first device by 2 dB) based on the current transmit power. For example, the first indication information occupies two bits, and the two bits are an adjustment value index. When the two bits have the value of 00, it indicates the decrease by 0 dB; when the two bits have the value of 01, it indicates a decrease by 2 dB; when the two bits have the value of 10, it indicates the decrease by 5 dB; or when the two bits have the value of 11, it indicates the decrease by 10 dB. To avoid a case in which the signal from the first device cannot be received due to an excessively low transmit power of the first device, the second device may first determine that a value of the first indication information is 01 or 10, so that the first device first decreases the transmit power by a small value.

When determining the first indication information, if the second device has received the signal (such as a reference signal or the RN16 signaling) from the first device, the second device may first determine quality of the signal received from the first device, such as a reference signal received power (reference signal received power, RSRP), reference signal received quality (reference signal received quality, RSRQ), a received signal strength indicator (received signal strength indicator, RSSI), a signal to interference plus noise ratio (signal to interference plus noise ratio, SINR), and a signal-to-noise ratio (signal-to-noise ratio, SNR). Then, the second device may determine an appropriate transmit power for the first device based on the signal quality, to avoid too severe interference with another surrounding communication device due to an excessively high transmit power of the first device, and avoid a case in which the second device cannot receive or cannot correctly receive the signal sent by the first device due to the excessively low transmit power of the first device. For example, based on the quality of the received signal from the first device and sensitivity of a receiver machine of the second device, the second device may determine that the transmit power of the first device may be decreased by a value in a range of 0 dB to 8 dB. Then, the second device may determine the first indication information based on the range, to indicate an adjustment value within the range. It is assumed that the first indication information occupies two bits, and the two bits are an adjustment value index. When the two bits have the value of 00, it indicates the decrease by 0 dB; when the two bits have the value of 01, it indicates a decrease by 2 dB; when the two bits have the value of 10, it indicates the decrease by 5 dB; or when the two bits have the value of 11, it indicates the decrease by 10 dB. Therefore, to decrease the transmit power of the first device, the second device may select one from 01 or 10 as the value of the first indication information. If major adjustment needs to be performed on the transmit power of the first device, the second device may determine 10 as the value of the first indication information. If only minor adjustment needs to be first performed on the transmit power of the first device, the second device may determine 01 as the value of the first indication information. For another example, when the first indication information indicates the power value, if the second device learns of the transmit power (for example, P1 dBm) of the first device, the second device may determine, based on an adjustment value range and the transmit power of the first device, that a power value range that may be indicated by the first indication information is [P1-8, P1] dBm. Then, the second device may determine the first indication information based on the power value range. It is assumed that the second device needs to indicate the transmit power of the first device to be (P1-7) dBm, and a power value indicated by the first indication information with the value of 10 is (P1-7) dBm. Therefore, the second device may determine that 10 is the value of the first indication information.

It should be understood that the foregoing two cases in which the first indication information is determined are merely examples for description, and constitute no limitation thereto.

It should be further understood that the transmit power of the first device is related to an uplink coverage range of the first device. A higher transmit power of the first device indicates a larger uplink coverage range of the first device, and a lower transmit power of the first device indicates smaller uplink coverage of the first device. Therefore, when adjusting the transmit power of the first device, the second device may indirectly control a range in which inventory needs to be performed. For example, the second device may indicate the transmit power of the first device to be P1 dBm, where an uplink coverage range corresponding to the P1 dBm may be a region 1. After the second device completes inventorying a first device in the region 1, an inventory flag of the first device in the region 1 may be flipped. Then, the second device may re-indicate the transmit power of the first device to be P2 dBm, where an uplink coverage range corresponding to the P2 dBm may be a region 2. An area of the region 2 is larger than an area of the region 1. In this case, the second device may inventory a first device in the region 2 and outside the region 1. It can be learned that the second device may control the transmit power of the first device, to inventory first devices in a near-to-far manner.

702. The second device sends the first indication information to the first device.

After determining the first indication information, the second device may send the first indication information to the first device. Correspondingly, the first device may receive the first indication information from the second device.

Specifically, the second device may send the first indication information to the first device via first signaling, second signaling, third signaling, fourth signaling, or fifth signaling. In other words, the first indication information may be carried in the first signaling, the second signaling, the third signaling, the fourth signaling, or the fifth signaling.

The first signaling may be for selecting (indicating) one or more first devices. The first signaling may alternatively change a status (for example, a value of the inventory flag) of the selected one or more first devices. The one or more first devices include the first device in step 702. The first signaling may be Select signaling, or the first signaling may include all functions of the Select signaling. In this case, the second device may send the Select signaling to select one or more tags (namely, the first devices). The first signaling may be broadcast signaling. In addition, it can be learned from the functions of the Select signaling that the first signaling may be for selecting the one or more first devices based on an ID, and change the status of the one or more first devices. For more detailed content of the Select signaling, refer to the foregoing related descriptions, including the foregoing indication information (for example, first four bits of an EPC are 0011) that is for filtering tags and that is carried in the Select signaling. Details are not described herein again.

The second signaling is for initializing random access of the one or more first devices. The second signaling may be Query signaling, or the second signaling may include all functions of the Query signaling. The second signaling may be broadcast signaling. Therefore, all first devices within a communication range of the second device may receive the second signaling. The second signaling is for initializing random access of the one or more first devices (that is, initializes one round of inventory process), that is, initializes counters and the like of the one or more first devices (such as the tags), that is, the second signaling (namely, the Query signaling) may be for initializing counters of all the tags in the communication range of the second device. When a value of an initialized counter of the first device is 0, the first device may send the RN16 signaling to the second device. For more detailed descriptions of the Query signaling (for example, the Query signaling is for indicating a transmission parameter, selecting a tag that needs to be inventorized, or the like), refer to the foregoing related descriptions of the Query signaling. Details are not described herein again.

The third signaling is for notifying random access. The third signaling may be QueryRep signaling, or the third signaling may include all functions of the QueryRep signaling. The third signaling may be broadcast signaling. Specifically, that the third signaling notifies random access may be understood as that the third signaling indicates the one or more first devices to decrease values of the counters of the first devices by 1, and then a tag whose counter has a value of 0 may initiate random access (that is, send the RN16 signaling to the second device). For more detailed descriptions of the QueryRep signaling, refer to the foregoing related descriptions of the QueryRep signaling. Details are not described herein again.

The fourth signaling indicates the first device to report a device identifier, that is, indicate the first device to report an ID (such as an EPC or a TID) of the first device. The fourth signaling may be ACK signaling, or the fourth signaling may include all functions of the ACK signaling. When the value of the counter of the first device is 0, the first device may send the RN16 signaling to the second device, where the RN16 signaling may include a 16-bit random number. If the second device successfully receives the RN16 signaling from the first device, the second device may send the fourth signaling, where the fourth signaling may include the 16-bit random number previously fed back by the first device. Therefore, when the first device receives the fourth signaling from the second device, and determines that the fourth signaling includes the 16-bit random number previously sent, the first device may determine that the second device successfully receives the 16-bit random number previously sent by the first device. The first device may send the ID of the first device to the second device. Then, when the second device successfully receives the ID of the first device, it may indicate that the first device successfully performs random access, in other words, a random access success mark is that the second device successfully receives the ID of the first device. Optionally, the random access success mark may also be that the second device successfully receives the RN16 signaling from the first device (that is, a case in which there is no tag conflict). Correspondingly, the fourth signaling may further indicate that the first device successfully performs random access. The RN16 signaling may also be referred to as sixth signaling that may include all functions of the RN16 signaling.

The fifth signaling is for scheduling data, which may be understood as that the fifth signaling may be for scheduling uplink or downlink data transmission. Specifically, the fifth signaling may be control signaling, for example, downlink control information (downlink control information, DCI), or the like. The fifth signaling may include scheduling information, where the scheduling information may be for controlling or scheduling uplink and downlink transmission resources. The transmission resource may include a time domain resource, a frequency domain resource, and the like.

It should be understood that, because the first indication information may be carried in one of the different signaling, such as the first signaling, the second signaling, the third signaling, the fourth signaling, or the fifth signaling, and the different signaling has different sending frequencies or sending periodicities, when the first indication information is carried in one of the different signaling, valid time of the first indication information may be different. Descriptions of the valid time are separately provided below.

When the first indication information is carried in the first signaling, the first transmit power (namely, a transmit power determined by the first device based on the first indication information) is valid in a random access process corresponding to the first signaling. The random process corresponding to the first signaling is one or more rounds of random access processes between the first signaling and a next piece of first signaling. Specifically, in a chronological order, there may be one or more pieces of second signaling between one piece of first signaling and a next piece of first signaling (where one piece of second signaling may correspond to one round of random access process). Correspondingly, there may be one or more rounds of random access processes initialized via the one or more pieces of second signaling, and the one or more rounds of random access processes are a random access process corresponding to a previous piece of first signaling. It should be noted that, that the first signaling carries the first indication information is optional, to be specific, the first signaling may carry the first indication information, or may not carry the first indication information. If one piece of first signaling does not carry the first indication information, in a possible manner, first indication information in a previous piece of first signaling that carries the first indication information is still valid, that is, a first transmit power determined based on the previous piece of first signaling is still valid; or in another possible manner, sending is performed at a default transmit power (for example, at the maximum transmit power).

In addition, the first signaling is the broadcast signaling. When the first indication information is carried in the first signaling, all the first devices in the communication range of the second device may receive the first signaling. These devices may be divided into two parts. A first part may be a first device (for example, the selected first device whose EPC has first four bits of 0011) selected via the first signaling, and a second part may be a first device not selected via the first signaling. In this case, the first indication information may be valid for only the first device in the first part, or may be valid for the first devices in both the first part and the second part. The specific part for which the first indication information is valid may be selected based on an actual situation. For example, if types of the first device may be classified into two types, a maximum transmit power of a first-type first device is higher, and a maximum transmit power of a second-type first device is lower. In this case, only the transmit power of the first type may need to be controlled, to reduce interference of the first-type first device. Therefore, the first-type first device may be selected via the first signaling. In addition, the first indication information carried in the first signaling may be valid only for the selected first-type device.

When the first indication information is carried in the second signaling, the first transmit power is valid in a random access process corresponding to the second signaling. The random access process corresponding to the second signaling is one round of random access process initialized via the second signaling. Specifically, the second signaling may be for initializing one round of random access process (that is, initialize one round of inventory process). Correspondingly, the random access process corresponding to the second signaling may be the round of random access process initialized via the second signaling. One round of random access process may start with one piece of second signaling, and the second signaling may be followed by one or more pieces of third signaling. An end sign of the round of random access process may be that a next piece of second signaling appears, or after a plurality of pieces of third signaling, there is no first device feeding back the RN16 signaling, or (2^{Q}-1) pieces of third signaling have been sent. One round of inventory may include inventory on the one or more first devices. That the second signaling carries the first indication information is optional, to be specific, the second signaling may carry the first indication information, or may not carry the first indication information. If one piece of second signaling does not carry the first indication information, in a possible manner, first indication information in a previous piece of second signaling that carries the first indication information is still valid, that is, a first transmit power determined based on the previous piece of second signaling is still valid; or in another possible manner, sending is performed at a default transmit power (for example, at the maximum transmit power).

In addition, the second signaling is the broadcast signaling. When the first indication information is carried in the second signaling, all the first devices in the communication range of the second device may receive the second signaling. These devices may be divided into two parts. A first part may be a first device that needs to be inventorized in a current round of inventory process (for example, the second signaling may indicate that only a first device whose inventory flag is A needs to be inventorized in the current round of inventory). A second part may be a first device that does not need to be inventorized in the current round of inventory process. In this case, the first indication information may be valid only for the first device in the first part (that is, the first device in the first part needs to adjust a transmit power based on the first indication information, and the first device in the second part may not adjust a transmit power based on the first indication information), or may be valid for the first devices in both the first part and the second part.

When the first indication information is carried in the third signaling, the first transmit power is valid in a first time period in a random access process corresponding to the third signaling. The random access process corresponding to the third signaling is one round of random access process initialized via the second signaling before the third signaling. Specifically, the round of random access process initialized via the second signaling may include one or more pieces of third signaling. Therefore, one piece of third signaling may correspond to a part of time (namely, the first time period) in the round of random access process or a part of the round of random access process. The part of the process may be a communication process between the third signaling and a next piece of third signaling. If the third signaling is the last piece of third signaling in the round of random process, the part of the process may be a communication process between the third signaling and a next piece of second signaling or a next piece of first signaling. That the third signaling carries the first indication information is optional, to be specific, the third signaling may carry the first indication information, or may not carry the first indication information. If one piece of third signaling does not carry the first indication information, in a possible manner, first indication information in a previous piece of third signaling that carries the first indication information is still valid, that is, a first transmit power determined based on the previous piece of third signaling is still valid; or in another possible manner, sending is performed at a default transmit power (for example, at the maximum transmit power).

When the first indication information is carried in the fourth signaling, the first transmit power is valid in a unicast communication process corresponding to the fourth signaling. Specifically, the unicast communication process corresponding to the fourth signaling may include a process in which the first device feeds back the ID and a process in which the second device reads/writes into the first device. In addition, the fourth signaling may be response signaling for a single third device, and indicates the third device to report a device identifier and indicates that random access succeeds. Therefore, the fourth signaling may be valid only for the single third device. That the fourth signaling carries the first indication information is optional, to be specific, the fourth signaling may carry the first indication information, or may not carry the first indication information. If one piece of fourth signaling does not carry the first indication information, the first device may perform sending at a default transmit power (for example, at the maximum transmit power or a previous transmit power).

When the first indication information is carried in the fifth signaling, the first transmit power is valid in an uplink scheduling periodicity corresponding to the fifth signaling. Specifically, the fifth signaling may be for scheduling an uplink time domain resource of the first device, and indicates a time domain resource that can be for uplink transmission. Therefore, the first indication information may be valid in the corresponding uplink scheduling periodicity (namely, the time domain resource that is indicated by the fifth signaling and that can be for uplink transmission). Optionally, when the first indication information is carried in the fifth signaling, the first transmit power may also be valid in a time period corresponding to the fifth signaling. The time period corresponding to the fifth signaling is a time period between the fifth signaling and a next piece of fifth signaling. That the fifth signaling carries the first indication information is optional, to be specific, the fifth signaling may carry the first indication information, or may not carry the first indication information. If one piece of fifth signaling does not carry the first indication information, in a possible manner, first indication information in a previous piece of fifth signaling that carries the first indication information is still valid, that is, a first transmit power determined based on the previous piece of fifth signaling is still valid; or in another possible manner, sending is performed at a default transmit power (for example, at the maximum transmit power).

It should be noted that random access may be understood as inventory, and the random access process between the first device and the second device may be understood as a process in which the second device identifies the ID of the first device, or a process in which the first device sends the RN16 signaling to the second device, the second device sends the ACK signaling to the first device, and the first device feeds back the EPC to the second device. Optionally, the random access process between the first device and the second device may include only the process in which the first device sends the RN16 signaling to the second device.

703. The first device determines the transmit power based on the first indication information.

After receiving the first indication information from the second device, the first device may determine the transmit power (namely, the first transmit power) of the first device based on the first indication information, and then may send the uplink signal at the first transmit power.

The first indication information may indicate the transmit power in two manners. In one manner, the first indication information indicates an adjustment value. In the other manner, the first indication information directly indicates an absolute power value. For different indication manners, specific steps in which the first device determines the first transmit power may be different. The specific steps are separately described below.

When the first indication information indicates the power value, the first device may directly determine the first transmit power based on the power value indicated by the first indication information. Specifically, the first device may directly determine the power indicated by the first indication information as the first transmit power, and then the first device may perform sending at the first transmit power. Alternatively, the first device may first compare the power value indicated by the first indication information with the maximum transmit power of the first device. When the power value indicated by the first indication information is greater than the maximum transmit power of the first device, the first device cannot reach the transmit power indicated by the first indication information, and may determine the maximum transmit power as a subsequent uplink transmit power (namely, the first transmit power). When the power value indicated by the first indication information is less than or equal to the maximum transmit power of the first device, the first device can reach the transmit power indicated by the first indication information, and may determine the transmit power indicated by the first indication information as a subsequent uplink transmit power. For example, the value of the first indication information is 01, a value of the indicated transmit power is y2 dBm, and a value of the maximum transmit power of the first device is Pₘₐₓ dBm, where y2>Pₘₐₓ. Therefore, after receiving the first indication information, the first device may determine that the power value y2 indicated by the first indication information is greater than the maximum transmit power Pₘₐₓ of the first device, and may determine Pₘₐₓ as the subsequent uplink transmit power.

When the first indication information indicates the adjustment value, the first device may determine the first transmit power based on the adjustment value indicated by the first indication information and the current transmit power of the first device or the maximum transmit power. Specifically, when the adjustment value indicated by the first indication information is the difference between the first transmit power and the maximum transmit power, the first device may decrease the maximum transmit power by the adjustment value indicated by the first indication information, to obtain the first transmit power. When the adjustment value indicated by the first indication information is the difference between the first transmit power and the current transmit power of the first device, the first device may decrease the current transmit power of the first device by the adjustment value indicated by the first indication information, to obtain the first transmit power. For example, the value of the first indication information may be 01. The first device may determine that an adjustment value corresponding to the value 01 is x1 dB. When the adjustment value indicated by the first indication information is the difference between the first transmit power and the maximum transmit power, the first device may determine that a value of the first transmit power is (Pₘₐₓ-x1) dBm. When the adjustment value indicated by the first indication information is the difference between the first transmit power and the current transmit power of the first device, the first device may determine that a value of the first transmit power is (P_{now}-x1) dBm, where P_{now} represents the current transmit power of the first device.

It should be understood that maximum transmit powers the first device can reach at different moments may be different. Specifically, for a first device (for example, the first device is a passive tag) for which the second device needs to provide energy, the maximum transmit power the first device can currently reach is related to conditions such as a power of a signal currently received by the first device and a hardware condition (for example, energy absorption efficiency) of the first device. For a first device (for example, the first device is a semi-passive tag) for which the second device does not need to provide energy, the maximum transmit power the first device can currently reach is related to a power of a signal received by the first device, performance of an amplifier, and the like. For example, the first device is the passive tag, and the maximum transmit power that can be supported by the hardware condition of the first device is P3 dBm. However, an excitation signal currently sent by the second device may fail to support the transmit power of the first device to reach P3 dBm, but only support the transmit power to reach P4 dBm. P3 dBm>P4 dBm. In this case, the maximum transmit power the first device can currently reach is only P4 dBm. Then, if the second device increases the transmit power supported by the excitation signal, in this case, the excitation signal can support the transmit power of the first device to reach P3 dBm. Therefore, the maximum transmit power the first device can currently reach may be P3 dBm. It can be learned that the maximum transmit power the first device can currently reach is related to various factors (for example, strength of the excitation signal). Therefore, the maximum transmit powers the first device can reach at different moments may be different.

It should be further understood that the current transmit power of the first device may be less than or equal to the maximum transmit power the first device can currently reach. The current transmit power of the first device may be a power adjusted based on the indication information sent by the second device. For example, the second device may first indicate the first device to decrease the transmit power by N1 dB, and in this case, a value of a transmit power obtained through adjustment by the first device may be P5 dBm. Then, the second device may further send one piece of indication information to indicate the first device to further decrease the transmit power by N2 dB, and in this case, a value of a transmit power obtained through adjustment by the first device may be P6 dBm. It can be learned that when adjusting the power for the second time, the first device may perform adjustment based on the current transmit power (namely, P5 dBm) of the first device, instead of performing adjustment based on the maximum transmit power the first device can currently reach. The adjustment value N2 dB may also be understood as the difference between the first transmit power and the current transmit power of the first device.

The first device may receive the first indication information via the first signaling, the second signaling, the third signaling, the fourth signaling, or the fifth signaling. When receiving the first indication information via one of the different signaling, a case in which the first device performs power control may be different (for example, valid time of the first transmit power may be different). Therefore, the first device may further determine the valid time (namely, validity time) of the first transmit power, and then the first device may send a signal at the first transmit power within the valid time.

The first device may receive the first indication information via the first signaling, and may determine that the first transmit power is valid in the random access process corresponding to the first signaling. Therefore, the first device may send the signal at the first transmit power in the random access process corresponding to the first signaling. It should be noted that, that the first signaling received by the first device includes the first indication information is optional, to be specific, the first signaling received by the first device may include the first indication information, or may not include the first indication information. If one piece of first signaling does not include the first indication information, in a possible manner, in a random access process corresponding to the first signaling, the first device may adjust the transmit power based on power control indication information in a previous piece of first signaling that carries the power control indication information; or in another possible manner, in a random access process corresponding to the first signaling, the first device sends the signal at the default transmit power (for example, the maximum transmit power).

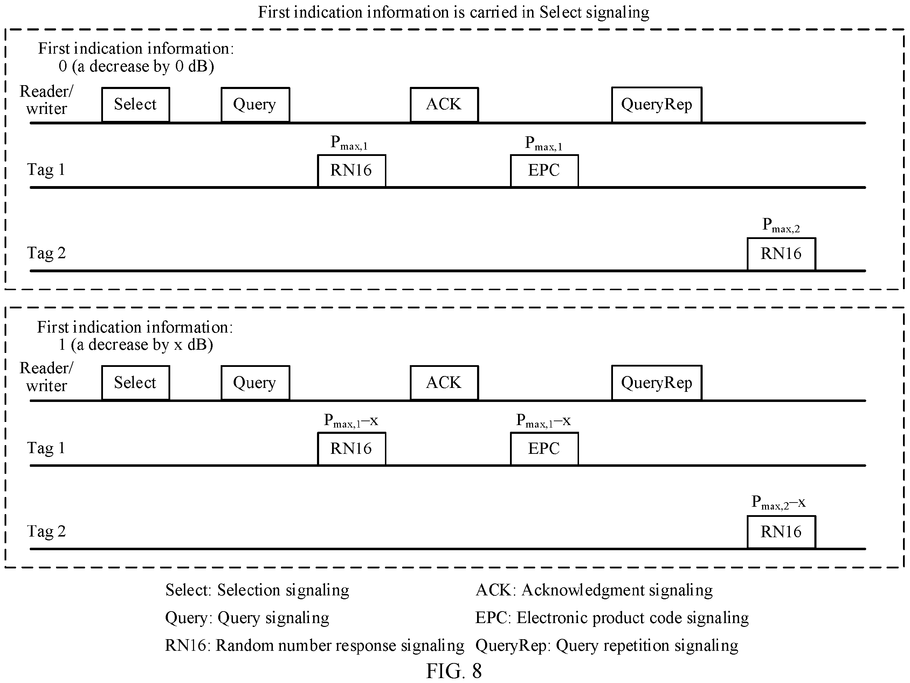

The following uses an example in which the first signaling is Select signaling for description. FIG. 8 is a diagram of power control according to an embodiment of the present invention. As shown in FIG. 8, a second device (namely, a reader/writer in FIG. 8) may carry first indication information in first signaling (namely, Select signaling in FIG. 8), to perform power control on first devices (namely, tags, including a tag 1 and a tag 2 in FIG. 8). After the tag receives the first indication information via the Select signaling, in subsequent one or more rounds of inventory processes (namely, one or more rounds of inventory processes corresponding to the Select signaling), the tag may perform power adjustment based on the first indication information included in the Select signaling until a next piece of Select signaling including first indication information is received. The first indication information included in the Select signaling may occupy one bit. When a value of the bit is 0, it indicates that the tag decreases a maximum transmit power by 0 dB (that is, it indicates that the tag sends an uplink signal at the maximum transmit power). When a value of the bit is 1, it indicates that the tag reduces a maximum transmit power by x dB. It can be seen from FIG. 8 that, after the tag 1 and the tag 2 receive the first indication information via the Select signaling, when a value of the first indication information is 0, the tag 1 and the tag 2 may send uplink signals (for example, RN16 signaling or EPC signaling) at maximum transmit powers in the subsequent inventory process. The maximum transmit power of the tag 1 may be represented as P_{max,1} dBm, and the maximum transmit power of the tag 2 may be represented as P_{max,2} dBm. Maximum transmit powers of different tags may be different. When a value of the first indication information is 1, the tag 1 and the tag 2 may send uplink signals at powers obtained by decreasing maximum transmit powers by x dB. Therefore, the tag 1 may perform sending at (P_{max,1}-x) dBm, and the tag 2 may perform sending at (P_{max,2}-x) dBm. It should be understood that, in some cases, the first indication information carried in the Select signaling may be valid only for one or more tags selected via the Select signaling.

The first device may alternatively receive the first indication information via the second signaling, and may determine that the first transmit power is valid in the random access process corresponding to the second signaling. Therefore, the first device may send the signal at the first transmit power in the random access process corresponding to the second signaling. It should be noted that, that the second signaling received by the first device includes the first indication information is optional, to be specific, the second signaling received by the first device may include the first indication information, or may not include the first indication information. If one piece of second signaling does not include the first indication information, in a possible manner, in a random access process corresponding to the second signaling, the first device may adjust the transmit power based on power control indication information in a previous piece of second signaling that carries the power control indication information; or in another possible manner, in a random access process corresponding to the second signaling, the first device sends the signal at the default transmit power (for example, the maximum transmit power).

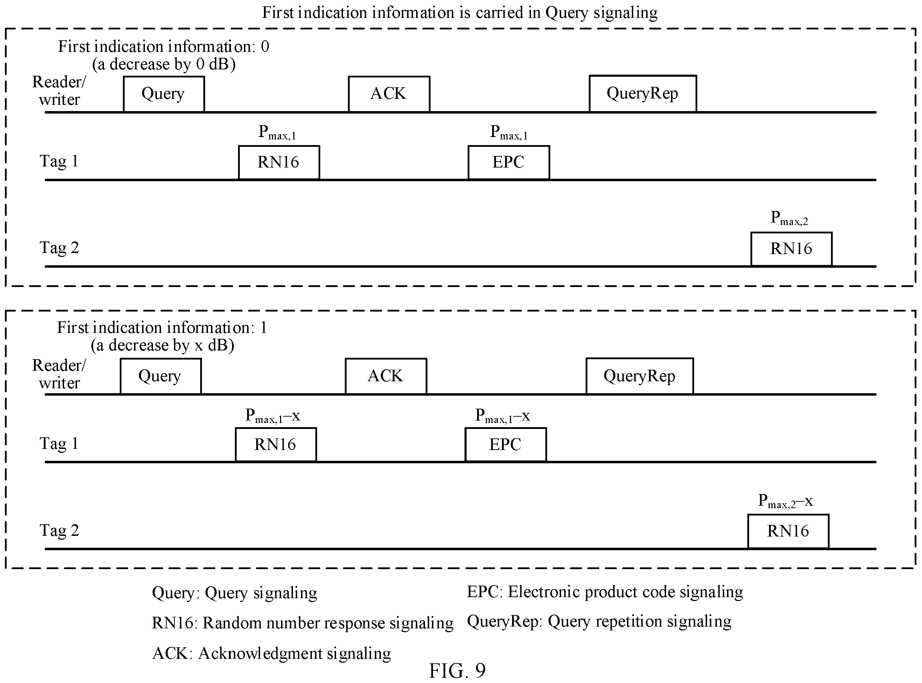

The following uses an example in which the second signaling is Query signaling for description. FIG. 9 is another diagram of power control according to an embodiment of the present invention. As shown in FIG. 9, a reader/writer may carry first indication information in Query signaling, to perform power control on tags. After the tag receives the first indication information via the Query signaling, in a subsequent round of inventory process (namely, a round of inventory process corresponding to the Query signaling), the tag may perform power adjustment based on the first indication information included in the Query signaling. The first indication information included in the Query signaling may be one bit. When a value of the bit is 0, it indicates a decrease by 0 dB; or when a value of the bit is 1, it indicates a decrease by x dB. It can be seen from FIG. 9 that, after a tag 1 and a tag 2 receive the first indication information via the Query signaling, when a value of the first indication information is 0, the tag 1 and the tag 2 may send uplink signals (for example, RN16 signaling or EPC signaling) at maximum transmit powers in the subsequent round of inventory process. The tag 1 performs sending at P_{max,1} dBm, and the tag 2 performs sending at P_{max,2} dBm; when a value of the first indication information is 1, the tag 1 and the tag 2 may send uplink signals at powers obtained by decreasing maximum transmit powers by x dB. Therefore, the tag 1 may perform sending (P_{max,1}-x) dBm, and the tag 2 may perform sending at (P_{max,2}-x) dBm. It should be understood that, in some cases, the first indication information carried in the Query signaling may be valid only for one or more tags, selected via the Query signaling, that need to be inventorized.

The first device may alternatively receive the first indication information via the third signaling, and may determine that the first transmit power is valid in the first time period in the random access process corresponding to the third signaling. Therefore, the first device may send the signal at the first transmit power in the first time period in the random access process corresponding to the third signaling. It should be noted that, that the third signaling received by the first device includes the first indication information is optional, to be specific, the third signaling received by the first device may include the first indication information, or may not include the first indication information. If one piece of third signaling does not include the first indication information, in a possible manner, in a first time period in a random access process corresponding to the third signaling, the first device may adjust a transmit power based on power control indication information in a previous piece of third signaling that carries the power control indication information; or in another possible manner, in a first time period in a random access process corresponding to the third signaling, the first device sends the signal at the default transmit power (for example, the maximum transmit power).

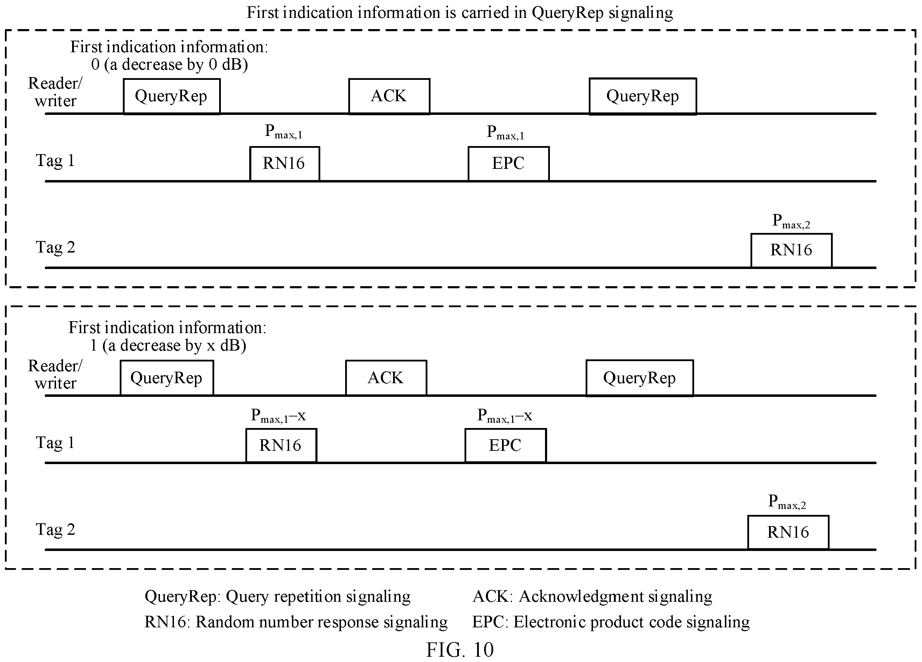

The following uses an example in which the third signaling is QueryRep signaling for description. FIG. 10 is still another diagram of power control according to an embodiment of the present invention. As shown in FIG. 10, a reader/writer may carry first indication information in QueryRep signaling, to perform power control on tags. After the tag receives the first indication information via the QueryRep signaling, in a subsequent round of inventory process (namely, a round of inventory process corresponding to the QueryRep signaling), the tag may perform power adjustment based on the first indication information included in the QueryRep signaling. When the QueryRep signaling is not the last piece of QueryRep signaling in the round of inventory process, the inventory process corresponding to the QueryRep signaling may be an inventory process between the QueryRep signaling and a next piece of QueryRep signaling. When the QueryRep signaling is the last piece of QueryRep signaling in the round of inventory process, the inventory process corresponding to the QueryRep signaling may be an inventory process between the QueryRep signaling and a next piece of Query signaling or a next piece of Select signaling. The first indication information included in the QueryRep signaling may be one bit. When a value of the bit is 0, it indicates a decrease by 0 dB; or when a value of the bit is 1, it indicates a decrease by x dB. It can be seen from FIG. 10 that, a tag 1 and a tag 2 may receive the first indication information via the QueryRep signaling. When a value of the first indication information is 0, in the subsequent inventory process (namely, an inventory process between two pieces of QueryRep signaling in FIG. 10), the tag 1 and the tag 2 may send uplink signals (for example, EPC signaling) at maximum transmit powers, that is, the tag 1 may perform sending at P_{max,1} dBm. When a value of the first indication information is 1, in the subsequent inventory process, the tag 1 and the tag 2 may send uplink signals at powers obtained by decreasing maximum transmit powers by x dB, that is, the tag 1 may perform sending at (P_{max,1}-x) dBm. However, in a next inventory process, the QueryRep signaling does not carry indication information. Therefore, the tag 2 may perform sending at P_{max,2} dBm by default (as shown in FIG. 10), or may adjust the transmit power based on the first indication information to perform sending at (P_{max,2}-x) dBm. It should be understood that, in some embodiments, the first indication information carried in the QueryRep signaling may also be valid in a plurality of times of inventory in one round of inventory process. In this case, when the value of the first indication information is 1, the tag 2 may decrease the transmit power by x dB to send the uplink signal at (P_{max,2}-x) dBm.

The first device may alternatively receive the first indication information via the fourth signaling, and may determine that the first transmit power is valid in the unicast communication process corresponding to the fourth signaling. Therefore, the first device may send the signal at the first transmit power in the unicast communication process corresponding to the fourth signaling. It should be noted that, that the fourth signaling received by the first device includes the first indication information is optional, to be specific, the fourth signaling received by the first device may include the first indication information, or may not include the first indication information. If one piece of fourth signaling does not include the first indication information, in a unicast communication process corresponding to the fourth signaling, the first device sends the signal at the default transmit power (for example, at the maximum transmit power or the previous transmit power).

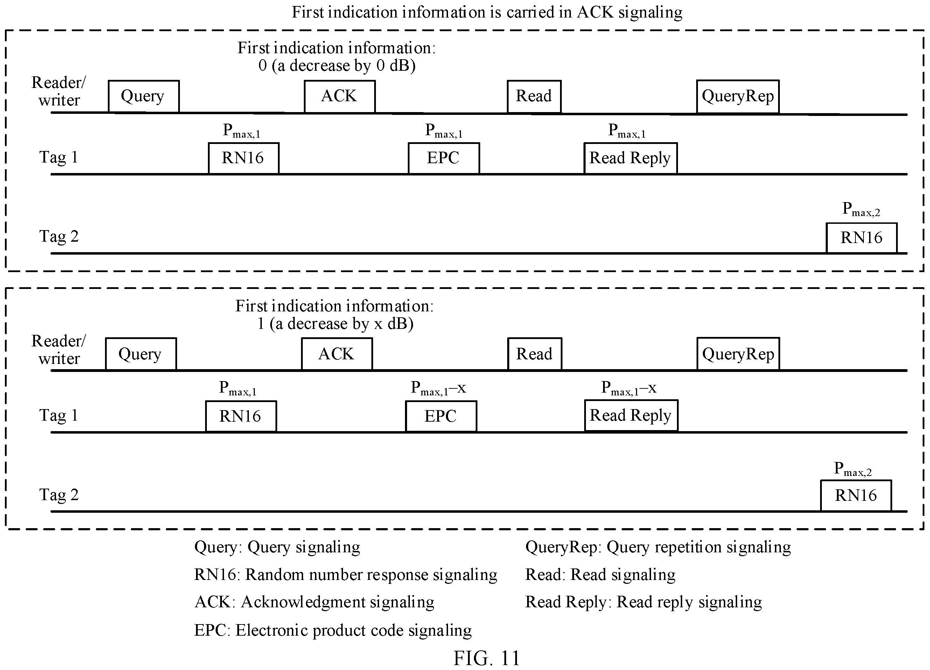

The following uses an example in which the fourth signaling is ACK signaling for description. FIG. 11 is still another diagram of power control according to an embodiment of the present invention. As shown in FIG. 11, a reader/writer may carry first indication information in ACK signaling, to perform power control on tags. After the tag receives the first indication information via the ACK signaling, in a subsequent unicast communication process (including sending EPC signaling), the tag may perform power adjustment based on the first indication information included in the ACK signaling until unicast communication for the tag ends (for example, the tag receives a next piece of QueryRep signaling, QueryAdjust signaling, Query signaling, or the like). The first indication information included in the ACK signaling may be one bit. When a value of the bit is 0, it indicates a decrease by 0 dB; or when a value of the bit is 1, it indicates a decrease by x dB. It can be seen from FIG. 11 that, before receiving the ACK signaling, a tag 1 may send an uplink signal (for example, RN16 signaling) at a default maximum transmit power, and then the tag 1 may receive the ACK signaling, where the ACK signaling includes the first indication information and a 16-bit random number previously sent by the tag 1. When a value of the first indication information is 0, the tag 1 may send the uplink signal (for example, the EPC signaling or Read Reply signaling) at the maximum transmit power in the subsequent unicast communication process, that is, the tag 1 may perform sending at P_{max,1} dBm. When a value of the first indication information is 1, in a subsequent inventory process, the tag 1 may send the uplink signal at a power obtained by decreasing the maximum transmit power by x dB, that is, the tag 1 may perform sending at (P_{max,1}-x) dBm. Before receiving the ACK signaling that responds to the tag 2 and that carries the first indication information, the tag 2 may send an uplink signal (for example, the RN16 signaling) at P_{max,2} dBm by default.

Alternatively, the first device may receive the first indication information via the fifth signaling, and may determine that the first transmit power is valid in the uplink scheduling periodicity corresponding to the fifth signaling (namely, the time domain resource that is indicated by the fifth signaling and that can be for uplink transmission). Therefore, the first device may send the signal at the first transmit power in the uplink scheduling periodicity corresponding to the fifth signaling. Optionally, when the first device receives the first indication information via the fifth signaling, the first device may determine that the first transmit power is valid in the time period corresponding to the fifth signaling (namely, a time period between the fifth signaling and a next piece of fifth signaling). It should be noted that, that the fifth signaling received by the first device includes the first indication information is optional, to be specific, the fifth signaling received by the first device may include the first indication information, or may not include the first indication information. If one piece of fifth signaling does not include the first indication information, in a unicast communication process corresponding to the fifth signaling, the first device may adjust the transmit power based on power control indication information in a previous piece of fifth signaling that carries the power control indication information. In another possible manner, in a unicast communication process corresponding to the fifth signaling, the first device sends the signal at the default transmit power (for example, the maximum transmit power).

For example, the first indication information included in the fifth signaling may be one bit. When a value of the bit is 0, it indicates a decrease by 0 dB; or when a value of the bit is 1, it indicates a decrease by x dB. The tag 1 may receive the fifth signaling. The time domain resource indicated in the fifth signaling may include a time domain resource 1 and a time domain resource 3, and the fifth signaling further includes the first indication information. The tag 1 may then adjust the transmit power based on the fifth signaling until a next piece of fifth signaling that carries power control indication information is received. When a value of the first indication information is 0, the tag 1 may send uplink signals on the time domain resource 1 and the time domain resource 3 at the maximum transmit power, that is, the tag 1 may perform sending at P_{max,1} dBm. When a value of the first indication information is 1, the tag 1 may send uplink signals on the time domain resource 1 and the time domain resource 3 at a power obtained by decreasing the maximum transmit power by x dB, that is, the tag 1 may perform sending at (P_{max,1}-x) dBm.

It can be learned that in the foregoing several cases, the first device may directly determine the first transmit power based on the first indication information carried in single signaling (namely, the first signaling, the second signaling, the third signaling, the fourth signaling, or the fifth signaling).

In addition, it should be understood that the second device may perform, by carrying the first indication information in the first signaling, power control on the first device (namely, the tag) in a relatively long time period (that is, the first transmit power is valid in the random access process corresponding to the first signaling), so that the first indication information can be prevented from being frequently sent to perform power control on the first device. The second device may control, by carrying the first indication information in the second signaling, the transmit power in the round of random access process initialized via the second signaling. A time granularity for performing power control via the second signaling is smaller compared with that in the first signaling, so that flexibility of power control can be improved, and the first indication information is also not sent too frequently. The second device performs power control on the first device by carrying the first indication information in the third signaling. A time granularity for performing power control via the third signaling is smaller compared with that in the second signaling, so that the flexibility of power control can be further improved. In addition, in some embodiments, power control may be performed on a single first device (namely, a single tag). The second device may also perform power control only on a unicast communication process of the single first device by carrying the first indication information in the fourth signaling, so that more flexible and accurate power control can be implemented. The second device may perform more real-time and flexible power control by carrying the first indication information in the fifth signaling.

In the foregoing embodiments, after receiving the first indication information, the first device may determine the transmit power based only on the first indication information. In addition, in some embodiments, the first device may alternatively determine the transmit power based on both the first indication information and a sequence length of a reference signal. Specifically, based on different distances between the first device and the second device, amounts by which the first device may adjust the transmit power are different. Generally, a first device that is closer to the second device may decrease the maximum transmit power by a larger value (for example, by x dB), and a first device that is farther from the second device may decrease the maximum transmit power by a smaller value (for example, by y dB), where x>y. Therefore, first devices in different region ranges may perform different power control.

A reference signal (namely, a preamble sequence, which may be a specific sequence or signal) may be included before data or signaling that is transmitted by the second device on a downlink. The reference signal may be used by the first device to identify start of downlink transmission. A length of the reference signal may vary (for example, one time the length, two times the length, or four times the length), and is for supporting different coverage distances between the second device and the first device. A longer preamble sequence indicates a longer coverage distance, and a shorter preamble sequence indicates a shorter coverage distance. Therefore, based on different sequence lengths of the reference signal, same first indication information may indicate different transmit powers. In some embodiments, when the first indication information is the same, a longer sequence length of the reference signal (a longer coverage distance) may indicate a smaller decreased amount of the power value. For example, the sequence length of the reference signal includes one time the length, two times the length, and four times the length, and the first indication information occupies one bit. When a value of the bit is 0, and the sequence length of the reference signal is one time the length, two times the length, or four times the length, it may indicate that the maximum transmit power is decreased by 0 dB. When a value of the bit is 1, and the sequence length of the reference signal is one time the length, it may indicate that the maximum transmit power is decreased by x dB. When a value of the bit is 1, and the sequence length of the reference signal is two times the length, it may indicate that the maximum transmit power is decreased by y dB. When a value of the bit is 1, and the sequence length of the reference signal is four times the length, it may indicate that the maximum transmit power is decreased by z dB. x may be greater than or equal to y, and y may be greater than or equal to z. It should be understood that the length of the preamble sequence of the reference signal may alternatively be one time the length, three times the length, or five times the length; may be one time the length, 1.5 times the length, or two times the length; or the like. This is not limited in embodiments of the present invention.

Before sending the first indication information, the second device may determine the sequence length of the reference signal. Specifically, the second device may determine a first sequence length, and then may send the reference signal to the first device. The reference signal is a reference signal corresponding to the first indication information, and a sequence length of the reference signal is the first sequence length. The first indication information may be carried in signaling (for example, the first signaling or the second signaling). A segment of the reference signal may be included before the signaling, to identify start of downlink transmission. The reference signal may be understood as the reference signal corresponding to the first indication information, and the reference signal is also a reference signal corresponding to the signaling.

Correspondingly, the first device may receive the reference signal from the second device, and then the first device may determine the first transmit power of the first device based on the first sequence length and the first indication information. The first sequence length is the sequence length of the reference signal. Specifically, the first device may receive the first indication information and the corresponding reference signal from the second device. The first indication information may be carried in the first signaling, the second signaling, the third signaling, the fourth signaling, or the fifth signaling. The first device may determine the sequence length of the reference signal through blind detection, or the second device may notify the first device of the sequence length of the reference signal in advance. In this way, the first device may determine the transmit power based on the first indication information and the sequence length of the reference signal.

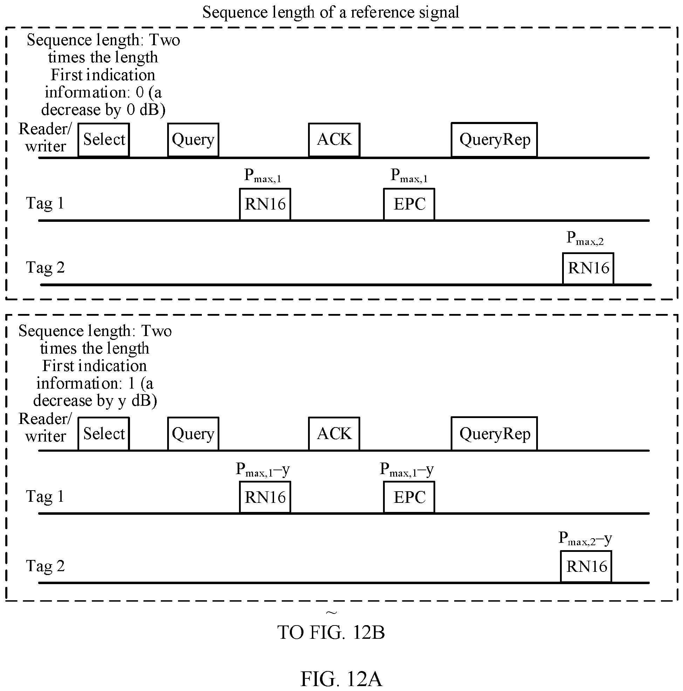

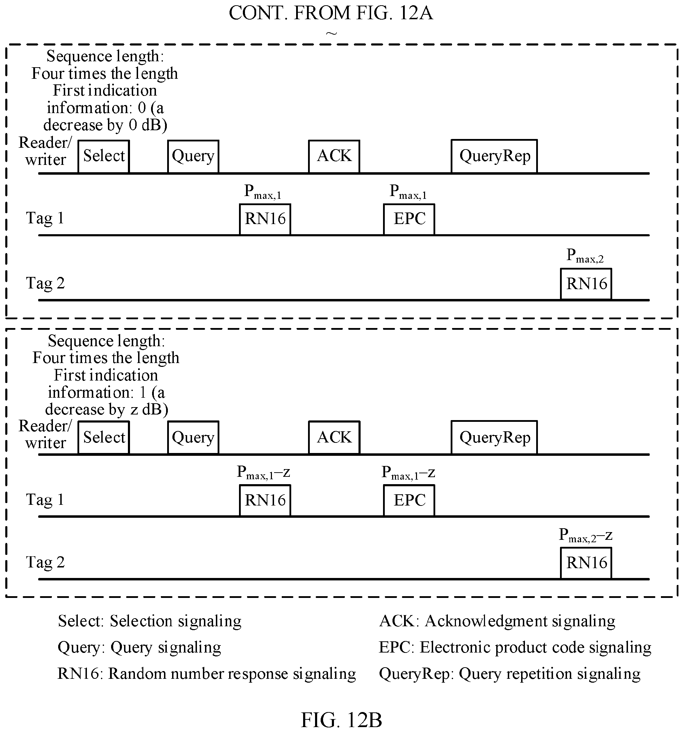

For example, FIG. 12A and FIG. 12B are still another diagram of power control according to an embodiment of the present invention. As shown in FIG. 12A and FIG. 12B, first indication information is carried in Select signaling, and a first device may determine a transmit power based on both the first indication information and a sequence length of a reference signal corresponding to the Select signaling. The first indication information may be one bit, and the sequence length of the reference signal may be two times the length or four times the length. When a value of the bit is 0, and the sequence length is two times the length or four times the length, it indicates a decrease by 0 dB. When a value of the bit is 1, and the sequence length is two times the length, it indicates a decrease by y dB. When a value of the bit is 1, and the sequence length is four times the length, it indicates a decrease by z dB. It can be seen from FIG. 12A and FIG. 12B that, after a tag 1 and a tag 2 receive the first indication information via the Select signaling, when a value of the first indication information is 0, the tag 1 and the tag 2 may send uplink signals (for example, RN16 signaling or EPC signaling) at maximum transmit powers in a subsequent inventory process. When a value of the first indication information is 1, and the length of the reference signal is two times the length, the tag 1 and the tag 2 may send uplink signals at powers obtained by decreasing maximum transmit powers by y dB. Therefore, the tag 1 may perform sending at (P_{max,1}-y) dBm, and the tag 2 may perform sending at (P_{max,2}-y) dBm. When a value of the first indication information is 1, and the length of the reference signal is four times the length, the tag 1 and the tag 2 may send uplink signals at powers obtained by decreasing maximum transmit powers by z dB. Therefore, the tag 1 may perform sending at (P_{max,1}-z) dBm, and the tag 2 may perform sending at (P_{max,2}-z) dBm.

It can be learned that when the first device jointly adjusts the transmit power based on both the first indication information and the sequence length of the reference signal, and the first indication information is the same, for different sequence lengths (corresponding to different coverage ranges or coverage levels), there may be different power adjustment values or power values, so that the method may be applied to different scenarios more flexibly. For example, the second device may gradually increase from a short value, to inventory first devices in a near-to-far manner.

In the foregoing embodiments, when performing power control on the first device, the second device performs power control via a single type of signaling, for example, first signaling, second signaling, third signaling, fourth signaling, or fifth signaling. In some other embodiments, the second device may perform power control in a combination of a plurality of types of signaling, for example, may combine any two types of signaling (for example, the first signaling and the second signaling, the first signaling and the third signaling, or the second signaling and the fourth signaling), may combine any three types of signaling (for example, the first signaling, the second signaling, and the third signaling), or may combine any four types of signaling (for example, the first signaling, the second signaling, the third signaling, and the fourth signaling). This is not limited in embodiments of the present invention.

After the second device sends the first indication information to the first device, the second device may send second indication information to the first device to further adjust the transmit power of the first device. The second indication information indicates a transmit power. Correspondingly, the first device may receive the second indication information from the second device. Then, the first device may determine a second transmit power of the first device based on the second indication information, where the second transmit power is less than or equal to the maximum transmit power of the first device; or the first device may determine a third transmit power of the first device based on the second indication information and the first transmit power, where the third transmit power is less than or equal to the first transmit power.

Specifically, after receiving the first indication information, the first device may further receive the second indication information, and then the first device may re-determine a transmit power based on the second indication information. The second indication information and the first indication information may be independent of each other, or may be associated with each other. When the second indication information and the first indication information are independent of each other, the second indication information may cover the first indication information, and the second device may re-determine the transmit power based only on the second indication information (that is, in a coverage manner), that is, determine the second transmit power of the second device. When the second indication information and the first indication information are associated with each other, the second device needs to re-determine the transmit power based on the first indication information and the second indication information. In other words, the second device may determine the third transmit power of the second device by overlaying the first indication information and the second indication information (that is, in an overlay manner). In the coverage manner, the transmit power may be determined based only on one piece of indication information. In the overlay manner, the transmit power may be determined based on one or more pieces of indication information. It should be understood that the transmit powers determined in the coverage manner and the overlay manner may be different, that is, the second transmit power and the third transmit power may be different.

In addition, it may be understood that, in the coverage manner, after the first device receives new indication information (for example, the second indication information), the first device adjusts the maximum transmit power based on the new indication information, that is, an adjustment value indicated by the new indication information is based on the maximum transmit power of the first device for indication. In the overlay manner, after the first device receives new indication information (for example, the second indication information), the first device adjusts a current transmit power based on the new indication information, that is, an adjustment value indicated by the new indication information is based on the current transmit power of the first device for indication.

The following uses the second signaling and the fourth signaling as an example for description. Specifically, the two manners of covering and overlaying the first indication information and the second indication information are separately described below by using an example in which the second signaling is the Query signaling and the fourth signaling is the ACK signaling. Indication information (namely, the first indication information and the second indication information) may be one bit. When a value of the 1-bit indication information is 0, and the indication information is separately carried in the Query signaling and the ACK signaling, it may indicate a decrease by 0 dB. When a value of the 1-bit indication information is 1, and the indication information is carried in the Query signaling, it may indicate a decrease by x2 dB. When a value of the 1-bit indication information is 1, and the indication information is carried in the ACK signaling, it may indicate a decrease by x 1 dB. It can be learned that when same indication information is carried in different signaling, adjustment values indicated by the indication information may be different.

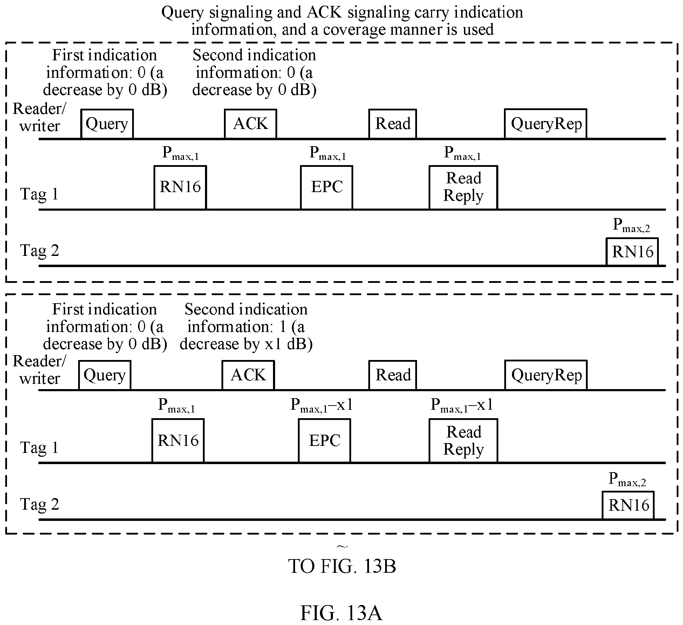

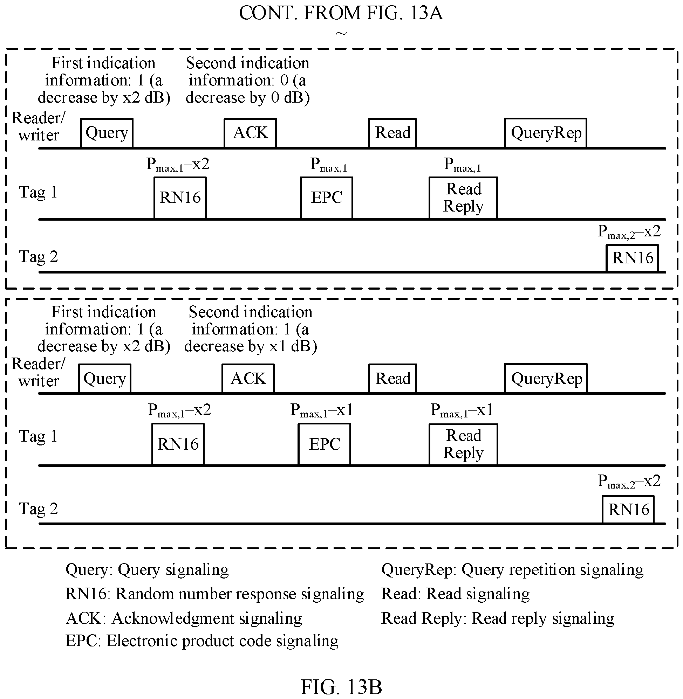

For the coverage manner, FIG. 13A and FIG. 13B are still another diagram of power control according to an embodiment of the present invention. As shown in FIG. 13A and FIG. 13B, a tag 1 and a tag 2 may receive, via Query signaling, first indication information sent by a reader/writer. When a value of the first indication information is 0, in a subsequent round of inventory process, the tag 1 and the tag 2 may send uplink signals (for example, RN16 signaling) at maximum transmit powers if receiving no other power control indication information. Therefore, the tag 1 may first send the RN16 signaling at the maximum transmit power of P_{max,1} dBm. Then, the tag 1 may receive second indication information via ACK signaling, and the tag 1 needs to adjust a transmit power based on the second indication information. When a value of the second indication information is 0, the tag 1 may determine to continue to send the uplink signal (for example, EPC signaling or Read Reply signaling) at the maximum transmit power. When a value of the second indication information is 1, the tag 1 may send the uplink signal at a power obtained by decreasing the maximum transmit power by x1 dB, that is, may perform sending at (P_{max,1}-x1) dBm. Similarly, the tag 2 may determine a transmit power based on the first indication information, and may send the RN16 signaling at the maximum transmit power of P_{max,2} dBm.

When a value of the first indication information is 1, in a subsequent round of inventory process, if receiving no other power control indication information, the tag 1 and the tag 2 may send uplink signals (for example, RN16 signaling) at powers obtained by decreasing maximum transmit powers by x2 dB. Therefore, the tag 1 may first send the RN16 signaling at (P_{max,1}-x2) dBm. Then, the tag 1 may receive second indication information via ACK signaling, and the tag 1 needs to adjust a transmit power again based on the second indication information. When a value of the second indication information is 0, the tag 1 may determine to continue to send the uplink signal (for example, EPC signaling or Read Reply signaling) at the maximum transmit power of P_{max,1} dBm. When a value of the second indication information is 1, the tag 1 may send the uplink signal at a power obtained by decreasing the maximum transmit power by x 1 dB, that is, may perform sending at (P_{max,1}-x1) dBm. Similarly, the tag 2 may determine a transmit power based on the first indication information, and may send the RN16 signaling at (P_{max,2}-x2) dBm.

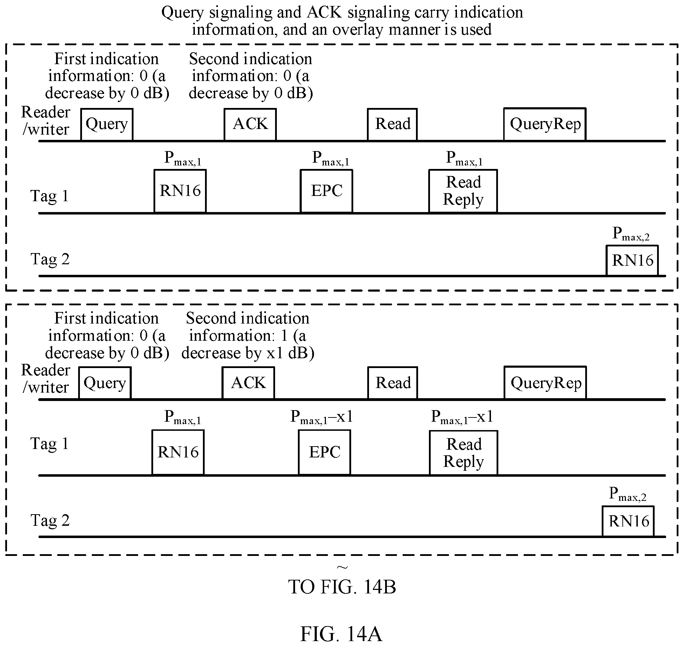

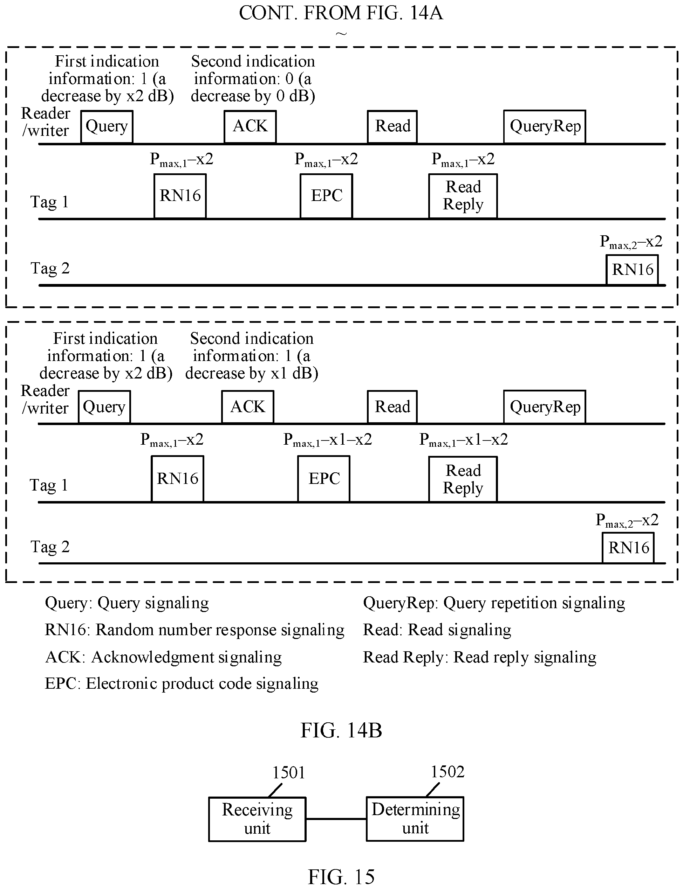

For the overlay manner, FIG. 14A and FIG. 14B are still another diagram of power control according to an embodiment of the present invention. As shown in FIG. 14A and FIG. 14B, a tag 1 and a tag 2 may receive, via Query signaling, first indication information sent by a reader/writer. When a value of the first indication information is 0, in a subsequent round of inventory process, the tag 1 and the tag 2 may send uplink signals (for example, RN16 signaling) at maximum transmit powers if receiving no other power control indication information. Therefore, the tag 1 may first send the RN16 signaling at the maximum transmit power of P_{max,1} dBm. Then, the tag 1 may receive second indication information via ACK signaling, and the tag 1 needs to adjust a transmit power based on the first indication information and the second indication information. When a value of the second indication information is 0, the tag 1 may determine to continue to send the uplink signal (for example, EPC signaling or Read Reply signaling) at the maximum transmit power of (P_{max,1}-0-0) dBm. When a value of the second indication information is 1, the tag 1 may send the uplink signal at a power obtained by decreasing the maximum transmit power by x1 dB, that is, may perform sending at (P_{max,1}-0-x1) dBm. Similarly, the tag 2 may determine a transmit power based on the first indication information, and may send the RN16 signaling at the maximum transmit power of P_{max,2} dBm.

When a value of the first indication information is 1, in a subsequent round of inventory process, if receiving no other power control indication information, the tag 1 and the tag 2 may send uplink signals (for example, RN16 signaling) at powers obtained by decreasing maximum transmit powers by x2 dB. Therefore, the tag 1 may first send the RN16 signaling at (P_{max,1}-x2) dBm. Then, the tag 1 may receive second indication information via ACK signaling, and the tag 1 needs to adjust a transmit power again based on the first indication information and the second indication information. When a value of the second indication information is 0, the tag 1 may determine to decrease the current transmit power by 0 dB, and continue to send the uplink signal (for example, the EPC signaling or Read Reply signaling) at (P_{max,1}-x2) dBm. When a value of the second indication information is 1, the tag 1 may send the uplink signal at a power obtained by decreasing the current transmit power by x1 dB, that is, at (P_{max,1}-x1-x2) dBm. Similarly, the tag 2 may determine a transmit power based on the first indication information, and may send the RN16 signaling at (P_{max,2}-x2) dBm. It should be understood that pieces of the power control shown in FIG. 8 to FIG. 14A and FIG. 14B are merely examples for description, and constitute no limitation thereto.

It can be learned that the indication information is carried in different types of signaling, and two different manners such as overlay and coverage are used, so that more flexible power control (for example, with different time granularities) and more precise power control (for example, for a plurality of first devices or a single first device) may be performed on the first device. Besides, in addition to carrying the indication information in different signaling for overlaying, in some embodiments, the indication information may also be carried in same signaling (for example, QueryRep signaling) for overlaying, for example, carried in two adjacent pieces of QueryRep signaling.

It should be understood that different first devices may have different device capabilities. The device capability may include one or more of the following: a signaling type, a power level, and a length of a reference signal. The signaling type is also a type of signaling (for example, the first signaling, the second signaling, the third signaling, the fourth signaling, or the fifth signaling) via which the first device supports power control. The power level is a level quantity of power adjustment supported by the first device. For example, that the power level is 2 may be understood as that two different levels of power adjustment may be supported, and that the power level is 4 may be understood as that four different levels of power adjustment may be supported. The length of the reference signal is a sequence length of a reference signal when the first device supports power adjustment. For example, the first device may support power adjustment when the sequence length of the reference signal is one time the length, two times the length, or four times the length.

It can be learned that the first devices may be classified based on the different capabilities of the first devices. Different types of devices may have different capabilities. When device types are defined (that is, when the first devices are classified), only a single dimension may be considered, for example, classification is performed based only on the signaling type, the power level, or the length of the reference signal; or two dimensions may be both considered, for example, both the signaling type and the power level, both the signaling type and the length of the reference signal, or both the power level and the length of the reference signal may be considered; or three dimensions may be all considered, for example, all of the signaling type, the power level, and the length of the reference signal are considered. It should be understood that, in addition to the three classification dimensions, namely, the signaling type, the power level, and the length of the reference signal, classification may be further performed in another classification dimension. This is not limited in embodiments of the present invention.

In some embodiments, the device may be defined based on signal types. For example, three types of first devices may be defined. A first-type first device may always send the uplink signal at the maximum transmit power, that is, does not support power control. A second-type first device may support power control via the first signaling (that is, the first indication information is carried in the first signaling). A third-type first device may support power control via both the first signaling and the fourth signaling.

In some other embodiments, the device types may be defined based on power levels. For example, three types of first devices may be defined. A first-type first device may always send the uplink signal at the maximum transmit power, that is, does not support power control. A second-type first device may support two different levels of power adjustment (for example, one bit is used for indication, where 0 indicates a decrease by 0 dB, and 1 indicates a decrease by x dB). A third-type first device may support four different levels of power adjustment (for example, two bits are used for indication, where 00 indicates a decrease by 0 dB, 01 indicates a decrease by x1 dB, 10 indicates a decrease by x2 dB, and 11 indicates a decrease by x3 dB).

In some still other embodiments, when the device types are defined based on power levels, the sequence length of the reference signal may be further considered. Based on a same sequence length, different types of devices may support different power adjustment values. For example, three types of first devices may be defined. When the sequence length of the reference signal is one time the length, two times the length, or four times the length, a first-type first device may send the uplink signal at the maximum transmit power regardless of a value of the indication information, that is, the first-type first device does not support power control. When the value of the first indication information is 0, and the sequence length of the reference signal is one time the length, two times the length, or four times the length, a second-type first device may send the uplink signal by decreasing the maximum transmit power by 0 dB. When the value of the first indication information is 1, and the sequence length of the reference signal is one time the length, two times the length, or four times the length, the second-type first device may send the uplink signal at powers obtained by decreasing the maximum transmit power by x1 dB, y1 dB, and z1 dB respectively. When the value of the first indication information is 0, and the sequence length of the reference signal is one time the length, two times the length, or four times the length, a third-type first device may send the uplink signal by decreasing the maximum transmit power by 0 dB. When the value of the first indication information is 1, and the sequence length of the reference signal is one time the length, two times the length, or four times the length, the third-type first device may send the uplink signal at powers obtained by decreasing the maximum transmit power by x2 dB, y2 dB, and z2 dB respectively.

It should be understood that the foregoing related descriptions of the device types of the first device are merely examples for description, and do not constitute a limitation thereto.

Because device capabilities of different first devices may be different, and different types of first devices may be defined based on the different device capabilities, the second device may perform more targeted power control on the first device based on the device type or the device capability of the first device. To perform more targeted power control on first devices of different device types or device capabilities, the second device may first select a first device that has a specific capability (for example, a first capability) or that is of a specific type (for example, a first type), and then perform more precise power control on the first device.

Specifically, the second device may first determine third indication information, and the second device sends the third indication information to the first device, where the third indication information indicates a device capability or a device type. Then, the second device may determine the first indication information based on the device capability or the device type indicated by the third indication information, and may send the first indication information to the first device based on the device capability or the device type indicated by the third indication information. Correspondingly, the first device may receive the third indication information from the second device, and then the first device may first determine whether the first device supports the device capability indicated by the third indication information or is of the device type indicated by the third indication information. When the first device does not support the device capability or is not of the device type, the first device may not participate in a subsequent inventory process or communication process. When the first device supports the device capability or is of the device type, the first device may participate in a subsequent inventory process or communication process, and the first device may determine the first transmit power of the first device based on the first indication information.

The third indication information may be carried in the first signaling (Select signaling) or the second signaling (the Query signaling).

For example, the second device may carry the third indication information in the Select signaling, and the third indication information indicates the first-type first device. In this case, when receiving the third indication information, the first device may first determine whether the first device is of the first type. When determining that the first device is of the first type, the first device may participate in the subsequent inventory process or communication process. When determining that the first device is not of the first type, for example, the first device is of a second type, the first device may not participate in the subsequent inventory process or communication process.

It can be learned that the second device may perform more flexible and more targeted power control on the first device based on the device type or the device capability of the first device, thereby improving efficiency of power control.

In embodiments of the present invention, the second device may carry the first indication information in one of different signaling (the first signaling/second signaling/third signaling/fourth signaling/fifth signaling), to implement power control on the first device. In addition, in some embodiments, corresponding to different sequence lengths of the reference signal, transmit powers indicated by the first indication information may be different, and coverage ranges supported by the reference signal vary with signal strength of the reference signal. Therefore, a manner of comprehensively determining the transmit power based on the first indication information and the sequence length of the reference signal can adapt to more scenarios, so that control on the transmit power of the first device is performed more effectively. In addition, the second device may further carry a plurality of pieces of indication information in a plurality of pieces of signaling, and control the transmit power of the first device more accurately and flexibly in the coverage or overlay manner of the pieces of indication information. In addition, for first devices of different device types or having different device capabilities, the second device may perform power control on the first devices in a targeted manner, thereby improving efficiency of power control.

It should be understood that, in FIG. 7, the power control method is described by using an example in which the first device and the second device are entities for performing interaction. However, the entities for performing interaction are not limited in this application. For example, the first device in FIG. 7 may be a chip, a chip system, or a processor that supports the first device in implementing the method, or may be a logical module or software that can implement all or some functions of the first device. The second device in FIG. 7 may also be a chip, a chip system, or a processor that supports the second device in implementing the method, or may be a logical module or software that can implement all or some functions of the first device.

Based on the foregoing network architecture, refer to FIG. 15. FIG. 15 is a diagram of a structure of a power control apparatus according to an embodiment of the present invention. The power control apparatus may be a first device, or may be a module in the first device. As shown in FIG. 15, the power control apparatus may further include:
a receiving unit 1501, configured to receive first indication information from a second device, where the first indication information indicates a transmit power; and
a determining unit 1502, configured to determine a first transmit power of a first device based on the first indication information, where the first transmit power is less than or equal to a maximum transmit power of the first device.

In an embodiment, the first indication information is carried in first signaling, second signaling, third signaling, fourth signaling, or fifth signaling, where
the first signaling is for selecting one or more first devices;
the second signaling is for initializing random access of the one or more first devices;
the third signaling is for notifying random access;
the one or more devices include the first device;
the fourth signaling indicates the first device to report a device identifier; and
the fifth signaling is for scheduling data.

In an embodiment, the fourth signaling further indicates that the first device successfully performs random access.

In an embodiment, the first signaling is further for changing a status of the selected one or more first devices.

In an embodiment, the second signaling is broadcast signaling.

In an embodiment, when the first indication information is carried in the first signaling, the first transmit power is valid in a random access process corresponding to the first signaling;
when the first indication information is carried in the second signaling, the first transmit power is valid in a random access process corresponding to the second signaling;
when the first indication information is carried in the third signaling, the first transmit power is valid in a first time period in a random access process corresponding to the third signaling;
when the first indication information is carried in the fourth signaling, the first transmit power is valid in a unicast communication process corresponding to the fourth signaling; or
when the first indication information is carried in the fifth signaling, the first transmit power is valid in an uplink scheduling periodicity corresponding to the fifth signaling.

In an embodiment, that the first indication information indicates a transmit power includes:
The first indication information indicates the first transmit power; or
the first indication information indicates an adjustment value, where the adjustment value is a difference between a maximum transmit power of the first device and the first transmit power.

In an embodiment, the receiving unit 1501 is further configured to receive a reference signal from the second device, where the reference signal is a reference signal corresponding to the first indication information.

The determining unit 1502 is specifically configured to:
determine the first transmit power of the first device based on a first sequence length and the first indication information, where the first sequence length is a sequence length of the reference signal.

In an embodiment, the receiving unit 1501 is further configured to receive second indication information from the second device, where the second indication information indicates a transmit power.

The determining unit 1502 is further configured to determine a second transmit power of the first device based on the second indication information, where the second transmit power is less than or equal to the maximum transmit power of the first device.

Alternatively, the determining unit 1502 is further configured to determine a third transmit power of the first device based on the second indication information and the first transmit power, where the third transmit power is less than or equal to the first transmit power.

In an embodiment, the receiving unit 1501 is further configured to receive third indication information from the second device, where the third indication information indicates a device capability or a device type.

That the determining unit 1502 determines a first transmit power of a first device based on the first indication information includes:
When the first device supports the device capability or is of the device type, the determining unit 1502 determines the first transmit power of the first device based on the first indication information.

In an embodiment, the maximum transmit power is a maximum transmit power the first device can currently reach.

For more detailed descriptions of the receiving unit 1501 and the determining unit 1502, directly refer to the related descriptions of the first device in the method embodiment shown in FIG. 7. Details are not described herein again.

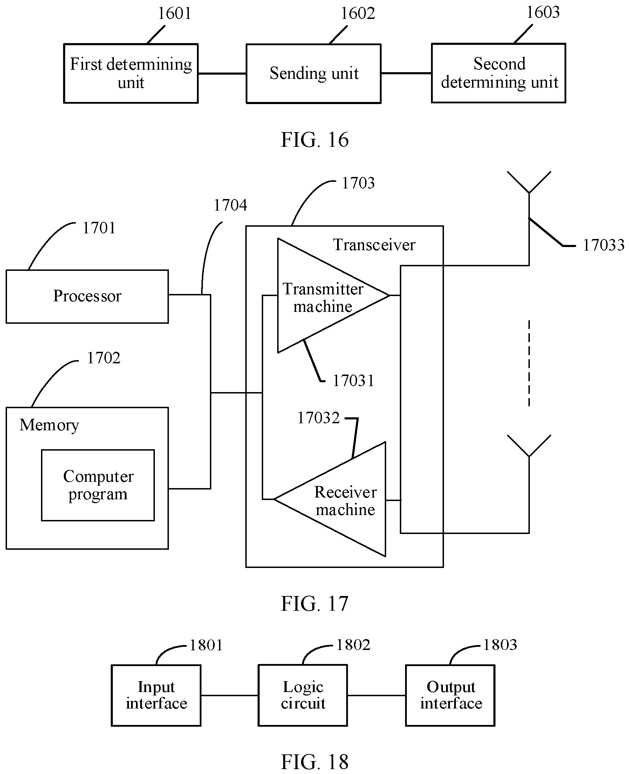

Based on the foregoing network architecture, refer to FIG. 16. FIG. 16 is a diagram of a structure of another power control apparatus according to an embodiment of the present invention. The power control apparatus may be a second device, or may be a module in the second device. As shown in FIG. 16, the power control apparatus may further include:
a first determining unit 1601, configured to determine first indication information, where the first indication information indicates a transmit power; and
a sending unit 1602, configured to send the first indication information to a first device.

In an embodiment, the first indication information is carried in first signaling, second signaling, third signaling, fourth signaling, or fifth signaling, where
the first signaling is for selecting one or more first devices;
the second signaling is for initializing random access of the one or more first devices;
the third signaling is for notifying random access;
the one or more devices include the first device;
the fourth signaling indicates the first device to report a device identifier; and
the fifth signaling is for scheduling data.

In an embodiment, the fourth signaling further indicates that the first device successfully performs random access.

In an embodiment, the first signaling is further for changing a status of the selected one or more first devices.

In an embodiment, the second signaling is broadcast signaling.

In an embodiment, when the first indication information is carried in the first signaling, a first transmit power is valid in a random access process corresponding to the first signaling;
when the first indication information is carried in the second signaling, a first transmit power is valid in a random access process corresponding to the second signaling;
when the first indication information is carried in the third signaling, a first transmit power is valid in a first time period in a random access process corresponding to the third signaling;
when the first indication information is carried in the fourth signaling, a first transmit power is valid in a unicast communication process corresponding to the fourth signaling; or
when the first indication information is carried in the fifth signaling, a first transmit power is valid in an uplink scheduling periodicity corresponding to the fifth signaling.

In an embodiment, that the first indication information indicates a transmit power includes:
The first indication information indicates the first transmit power; or
the first indication information indicates an adjustment value, where the adjustment value is a difference between a maximum transmit power of the first device and the first transmit power.

In an embodiment, the apparatus may further include:
a second determining unit 1603, configured to determine a first sequence length.

The sending unit 1602 is further configured to send a reference signal to the first device, where the reference signal is a reference signal corresponding to the first indication information, and a sequence length of the reference signal is the first sequence length.

In an embodiment, the sending unit 1602 is further configured to send second indication information to the first device, where the second indication information indicates a transmit power.

In an embodiment, the sending unit 1602 is further configured to send third indication information to the first device, where the third indication information indicates a device capability or a device type.

The first determining unit 1601 is specifically configured to:
determine the first indication information based on the device capability or the device type.

That the sending unit 1602 sends the first indication information to a first device includes:
The sending unit 1602 sends the first indication information to the first device based on the device capability or the device type.

For more detailed descriptions of the first determining unit 1601, the sending unit 1602, and the second determining unit 1603, directly refer to the related descriptions of the second device in the method embodiment shown in FIG. 7. Details are not described herein again.

Based on the foregoing network architecture, refer to FIG. 17. FIG. 17 is a diagram of a structure of still another power control apparatus according to an embodiment of the present invention. As shown in FIG. 17, the power control apparatus may include a processor 1701, a memory 1702, a transceiver 1703, and a bus 1704. The memory 1702 may exist independently, and may be connected to the processor 1701 via the bus 1704. The memory 1702 may alternatively be integrated with the processor 1701. The bus 1704 is configured to implement connections between these components. In a case, as shown in FIG. 17, the transceiver 1703 may include a transmitter machine 17031, a receiver machine 17032, and an antenna 17033. In another case, the transceiver 1703 may include a transmitter (that is, an output interface) and a receiver (that is, an input interface). The transmitter may include a transmitter machine and an antenna, and the receiver may include a receiver machine and an antenna.

In an embodiment, the power control apparatus may be a first device or a module (for example, a chip) in the first device. When a computer program stored in the memory 1702 is executed, the processor 1701 is configured to control the receiving unit 1501 to perform the operations performed in the foregoing embodiment. The processor 1701 is further configured to perform the operations performed by the determining unit 1502. The transceiver 1703 is configured to perform the operations performed by the receiving unit 1501 in the foregoing embodiment. The first device or the module in the first device may further be configured to perform the method performed by the first device in the method embodiment in FIG. 7. Details are not described herein again.

In an embodiment, the power control apparatus may be a second device or a module (for example, a chip) in the second device. When a computer program stored in the memory 1702 is executed, the processor 1701 is configured to control the sending unit 1602 to perform the operations performed in the foregoing embodiment. The processor 1701 is further configured to perform the operations performed by the first determining unit 1601 and the second determining unit 1603. The transceiver 1703 is configured to perform the operations performed by the sending unit 1602 in the foregoing embodiment. The second device or the module in the second device may further be configured to perform the method performed by the second device in the method embodiment in FIG. 7. Details are not described herein again.

Based on the foregoing network architecture, refer to FIG. 18. FIG. 18 is a diagram of a structure of yet another power control apparatus according to an embodiment of the present invention. As shown in FIG. 18, the power control apparatus may include an input interface 1801, a logic circuit 1802, and an output interface 1803. The input interface 1801 is connected to the output interface 1803 via a logic circuit 1802. The input interface 1801 is configured to receive information from another power control apparatus, and the output interface 1803 is configured to: output, schedule, or send information to the another power control apparatus. The logic circuit 1802 is configured to perform an operation other than the operations by the input interface 1801 and the output interface 1803, for example, implement functions implemented by the processor 1701 in the foregoing embodiment. The power control apparatus may be the second device or the module in the second device, or may be the first device or the module in the first device. For more detailed descriptions of the input interface 1801, the logic circuit 1802, and the output interface 1803, directly refer to the related descriptions of the first device and the second device in the foregoing method embodiments. Details are not described herein again.

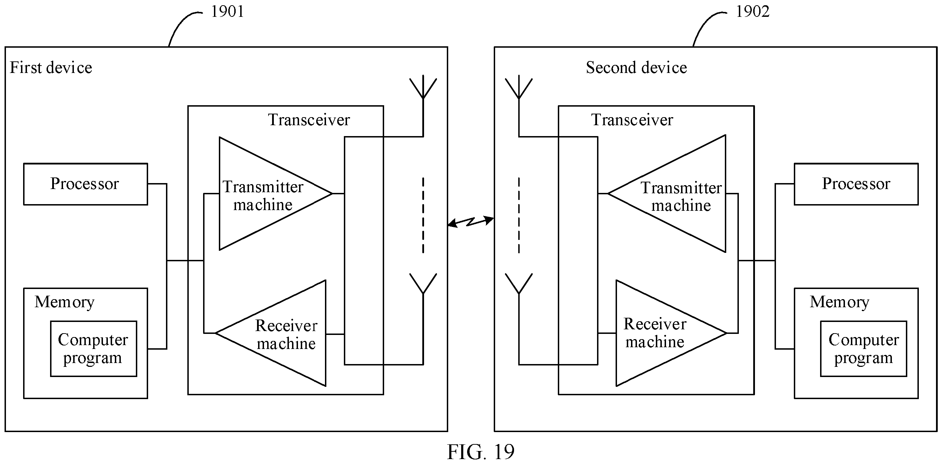

Based on the foregoing network architecture, refer to FIG. 19. FIG. 19 is a diagram of a structure of a power control system according to an embodiment of the present invention. As shown in FIG. 19, the power control system may include a first device 1901 and a second device 1902. For detailed descriptions, refer to the descriptions of the power control method shown in FIG. 7.

An embodiment of the present invention further discloses a computer-readable storage medium. The computer-readable storage medium stores instructions, and when the instructions are executed, the method in the foregoing method embodiment is performed.

An embodiment of the present invention further discloses a computer program product including instructions. When the instructions are executed, the method in the foregoing method embodiment is performed.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

An embodiment of the present invention further discloses a computer-readable storage medium. The computer-readable storage medium stores instructions, and when the instructions are executed, the method in the foregoing method embodiment is performed.

An embodiment of the present invention further discloses a computer program product including instructions. When the instructions are executed, the method in the foregoing method embodiment is performed.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A power control method, comprising:
receiving, by a first device, first indication information from a second device, wherein the first indication information indicates a transmit power; and
determining, by the first device, a first transmit power of the first device based on the first indication information, wherein the first transmit power is less than or equal to a maximum transmit power of the first device.

2. The method according to claim 1, wherein the first indication information is carried in first signaling, second signaling, third signaling, fourth signaling, or fifth signaling, wherein
the first signaling is for selecting one or more first devices;
the second signaling is for initializing random access of the one or more first devices;
the third signaling is for notifying random access;
the one or more devices comprise the first device;
the fourth signaling indicates the first device to report a device identifier; and
the fifth signaling is for scheduling data.

3. The method according to claim 2, wherein when the first indication information is carried in the first signaling, the first transmit power is valid in a random access process corresponding to the first signaling;
when the first indication information is carried in the second signaling, the first transmit power is valid in a random access process corresponding to the second signaling;
when the first indication information is carried in the third signaling, the first transmit power is valid in a first time period in a random access process corresponding to the third signaling;
when the first indication information is carried in the fourth signaling, the first transmit power is valid in a unicast communication process corresponding to the fourth signaling; or
when the first indication information is carried in the fifth signaling, the first transmit power is valid in an uplink scheduling periodicity corresponding to the fifth signaling.

4. The method according to any one of claims 1 to 3, wherein that the first indication information indicates a transmit power comprises:
the first indication information indicates the first transmit power; or
the first indication information indicates an adjustment value, wherein the adjustment value is a difference between the maximum transmit power of the first device and the first transmit power.

5. The method according to any one of claims 1 to 4, wherein the method further comprises:
receiving, by the first device, a reference signal from the second device, wherein the reference signal is a reference signal corresponding to the first indication information; and
the determining, by the first device, a first transmit power of the first device based on the first indication information comprises:
determining, by the first device, the first transmit power of the first device based on a first sequence length and the first indication information, wherein the first sequence length is a sequence length of the reference signal.

6. The method according to any one of claims 2 to 5, wherein the method further comprises:
receiving, by the first device, second indication information from the second device, wherein the second indication information indicates a transmit power; and
determining a second transmit power of the first device based on the second indication information, wherein the second transmit power is less than or equal to the maximum transmit power of the first device; or
determining a third transmit power of the first device based on the second indication information and the first transmit power, wherein the third transmit power is less than or equal to the first transmit power.

7. The method according to any one of claims 1 to 6, wherein the method further comprises:
receiving, by the first device, third indication information from the second device, wherein the third indication information indicates a device capability or a device type; and
the determining, by the first device, a first transmit power of the first device based on the first indication information comprises:
when the first device supports the device capability or is of the device type, determining, by the first device, the first transmit power of the first device based on the first indication information.

8. The method according to any one of claims 1 to 7, wherein the maximum transmit power is a maximum transmit power the first device can currently reach.

9. A power control method, comprising:
determining, by a second device, first indication information, wherein the first indication information indicates a transmit power; and
sending, by the second device, the first indication information to a first device.

10. The method according to claim 9, wherein the first indication information is carried in first signaling, second signaling, third signaling, fourth signaling, or fifth signaling, wherein
the first signaling is for selecting one or more first devices;
the second signaling is for initializing random access of the one or more first devices;
the third signaling is for notifying random access;
the one or more devices comprise the first device;
the fourth signaling indicates the first device to report a device identifier; and
the fifth signaling is for scheduling data.

11. The method according to claim 10, wherein when the first indication information is carried in the first signaling, a first transmit power is valid in a random access process corresponding to the first signaling;
when the first indication information is carried in the second signaling, a first transmit power is valid in a random access process corresponding to the second signaling;
when the first indication information is carried in the third signaling, a first transmit power is valid in a first time period in a random access process corresponding to the third signaling;
when the first indication information is carried in the fourth signaling, a first transmit power is valid in a unicast communication process corresponding to the fourth signaling; or
when the first indication information is carried in the fifth signaling, a first transmit power is valid in an uplink scheduling periodicity corresponding to the fifth signaling.

12. The method according to any one of claims 9 to 11, wherein that the first indication information indicates a transmit power comprises:
the first indication information indicates the first transmit power; or
the first indication information indicates an adjustment value, wherein the adjustment value is a difference between a maximum transmit power of the first device and the first transmit power.

13. The method according to any one of claims 9 to 12, wherein the method further comprises:
determining a first sequence length; and
sending a reference signal to the first device, wherein the reference signal is a reference signal corresponding to the first indication information, and a sequence length of the reference signal is the first sequence length.

14. The method according to any one of claims 9 to 13, wherein the method further comprises:
sending, by the second device, second indication information to the first device, wherein the second indication information indicates a transmit power.

15. The method according to any one of claims 9 to 14, wherein the method further comprises:
sending, by the second device, third indication information to the first device, wherein the third indication information indicates a device capability or a device type;
the determining, by a second device, first indication information comprises:
determining, by the second device, the first indication information based on the device capability or the device type; and
the sending, by the second device, the first indication information to a first device comprises:
sending, by the second device, the first indication information to the first device based on the device capability or the device type.

16. A power control apparatus, comprising:
a receiving unit, configured to receive first indication information from a second device, wherein the first indication information indicates a transmit power; and
a determining unit, configured to determine a first transmit power of the first device based on the first indication information, wherein the first transmit power is less than or equal to a maximum transmit power of the first device.

17. A power control apparatus, comprising:
a first determining unit, configured to determine first indication information, wherein the first indication information indicates a transmit power; and
a sending unit, configured to send the first indication information to a first device.

18. A power control apparatus, comprising a processor, a memory, and a transceiver, wherein the transceiver is configured to: receive information from another power control apparatus other than the power control apparatus, and output information to the another power control apparatus other than the power control apparatus; and the processor invokes a computer program stored in the memory to implement the method according to any one of claims 1 to 15.

19. A computer-readable storage medium, wherein the computer-readable storage medium stores a computer program or computer instructions; and when the computer program or the computer instructions are run, the method according to any one of claims 1 to 15 is implemented.

20. A chip, comprising a processor, configured to execute a program stored in a memory, wherein when the program is executed, the chip is enabled to perform the method according to any one of claims 1 to 15.

21. A computer program product, wherein the computer program product comprises computer program code; and when the computer program code is run, the method according to any one of claims 1 to 15 is implemented.
